# EUROPEAN PATENT SPECIFICATION

(11) **EP 3 602 395 B1**
(45) Date of publication and mention of the grant of the patent: **08.09.2021**
(21) Application number: 18718207.6
(22) Date of filing: 20.03.2018
(51) Int. Cl.: G06K 9/00

(54) **METHOD BASED ON A PATHWAY ARTICLE WITH CALIBRATION INFORMATION**
VERFAHREN BASIEREND AUF EINEM FAHRBAHNARTIKEL MIT KALIBRIERUNGSINFORMATIONEN
PROCÉDÉ FONDÉ SUR UN ARTICLE DE VOIE ROUTIÈRE COMPRENANT DES INFORMATIONS D'ÉTALONNAGE

(30) Priority: 31.03.2017 US 201762480311 P
(43) Date of publication of application: 05.02.2020
(73) Proprietor: 3M Innovative Properties Company, Saint Paul, Minnesota 55133-3427 (US)
(72) Inventor: SHANNON, Robert W., Saint Paul, Minnesota 55133-3427 (US); CASNER, Glenn E., Saint Paul, Minnesota 55133-3427 (US); SOMASUNDARAM, Guruprasad, Saint Paul, Minnesota 55133-3427 (US); SINGH, Gautam, Saint Paul, Minnesota 55133-3427 (US); TILSTRA, Andrew H., Saint Paul, Minnesota 55133-3427 (US)
(74) Representative: Vossius & Partner Patentanwälte Rechtsanwälte mbB
(86) International application number: PCT/IB2018/051864
(87) International publication number: WO 2018/178808

(56) References cited:
- WO-A1-2016/109620
- US-A1- 2013 253 754
- US-A1- 2014 071 281

## Description

### TECHNICAL FIELD

This disclosure relates to pathway articles.

### BACKGROUND

Vehicles configured with one or more image capture devices use the information captured by the one or more image capture devices to perform one or more processes. For example, information captured by an image capture device of an autonomous vehicle may be used by the autonomous vehicle to perform one or more autonomous or semi-autonomous functions, such as driving the car without driver input, braking upon identifying a road hazard, maintaining speed relative to a second moving vehicle, or any other autonomous or semi-autonomous function.

WO 2016/109620 A1 is related to an identification system to improve safety on roads. It allows for the driver or for the vehicle itself, if it is autonomous or semi-autonomous, to have readable and useful information about road signs, roadways, and adjacent roadway information. The identification system comprises a marker with marker communication information that can be read by a vehicle information system to provide information to the vehicle. Information that the marker communication information may convey would allow the vehicle information system to detect or recognize, or both detect and recognize critical road sign, roadway information, and adjacent roadway information. Then, the vehicle information system could respond to the information received from the marker communication information.

US 2014/071281 A1 is related to a method for determining a response to misalignment of a camera monitoring a desired area. The method includes acquiring temporal related frames from the camera including a reference frame. A pixel location is determined of a reference object from the frames. Using the pixel location of the reference object, a displacement of the camera between a current frame and the reference frame is determined. For the displacement exceeding a first threshold, a new displacement of the camera is measured by introducing at least one additional object to a camera field of view and comparing the new displacement to a second threshold. For the new displacement not exceeding the second threshold, the camera is recalibrated using a determined pixel location and a physical location of the at least one additional object. For the new displacement exceeding the second threshold, notification is provided of a misalignment to an associated user device.

US 2013/253754 A1 is related to methods and devices for detecting traffic signals and their associated states. In one embodiment, an example method includes a scanning a target area using one or more sensors of a vehicle to obtain target area information. The vehicle may be configured to operate in an autonomous mode, and the target area may be a type of area where traffic signals are typically located. The method may also include detecting a traffic signal in the target area information, determining a location of the traffic signal, and determining a state of the traffic signal. Also, a confidence in the traffic signal may be determined. For example, the location of the traffic signal may be compared to known locations of traffic signals. Based on the state of the traffic signal and the confidence in the traffic signal, the vehicle may be controlled in the autonomous mode.

### SUMMARY

The invention is set out in claim 1.

In general, the disclosure is directed to a pathway article that includes calibration information. The calibration information may be used for calibrating an image capture device. For example, an image capture device may be configured to capture one or more images of a pathway article described herein. The image capture device may be calibrated based on the calibration information present in the one or more images of the pathway article. For example, the image capture device may be configured to adjust, based on the calibration information present in the image, one or more parameters associated with the image capture device. As another example, the image capture device may be configured to send the image to a second computing device (e.g., a processing unit external to and communicably coupled to the image capture device) for processing. Based on the calibration information present in the image, the second computing device may be configured to instruct the image capture device to adjust one or more parameters associated with the image capture device. Other examples are described throughout the disclosure.

The details of one or more examples of the disclosure are set forth in the accompanying drawings and the description below. Other features, objects, and advantages of the disclosure will be apparent from the description and drawings, and from the claims.

### BRIEF DESCRIPTION OF DRAWINGS

FIGS. 1A-B illustrate examples of pathway articles in accordance with one or more techniques of this disclosure.
FIGS. 2A-2N illustrate various examples of calibration information in accordance with one or more techniques of this disclosure.
FIG. 3 illustrates an example of a resolution test chart that may be implemented as calibration information in accordance with one or more techniques of this disclosure.
FIGS. 4A-D illustrate various examples of pathway articles in accordance with one or more techniques of this disclosure
FIG. 5A-D illustrate various examples of pathway articles in accordance with one or more techniques of this disclosure.
FIG. 6 illustrates a simplified example of a data structure corresponding to data extracted from supplemental information presented by a pathway article in accordance with one or more techniques of this disclosure.
FIG. 7 is block diagram illustrating an example image capture device.
FIG. 8 illustrates a system including a vehicle having an image capture device and a pathway article in accordance with one or more techniques of this disclosure.
FIG. 9 illustrates a system including multiple vehicles and a pathway article in accordance with one or more techniques of this disclosure.
FIG. 10 is a flowchart showing an example method in accordance with one or more techniques of this disclosure.
FIG. 11 is a flowchart showing an example method in accordance with one or more techniques of this disclosure.

### DETAILED DESCRIPTION

In general, the disclosure is directed to a pathway article that includes calibration information. The calibration information may be used for calibrating an image capture device. For example, an image capture device may be configured to capture one or more images of a pathway article described herein. The image capture device may be calibrated based on the calibration information present in the one or more images of the pathway article. For example, the image capture device may be configured to adjust, based on the calibration information present in the image, one or more parameters associated with the image capture device. As another example, the image capture device may be configured to send the image to a second computing device (e.g., a processing unit external to and communicably coupled to the image capture device) for processing. Based on the calibration information present in the image, the second computing device may be configured to instruct the image capture device to adjust one or more parameters associated with the image capture device. Other examples are described throughout the disclosure.

As described herein, the term "pathway" may refer to any pathway, such as a vehicle pathway or a pedestrian pathway. For example, a vehicle pathway may include a roadway, a parking lot, a pathway for a car, a pathway for a bicycle, a pathway for a plane, a waterway (e.g., a channel, a buoyed path, or a marina), a pathway for a boat (e.g., a channel, or a marina), an air pathway, are area above the surface of the earth (e.g., any area with in the earth's atmosphere or outside of the earth's atmosphere, a dock, an underwater pathway, an underground pathway, a pathway on a factory floor, any other vehicle pathway, or any area in which a vehicle may travel or otherwise use. As used herein, the term "vehicle" may refer to a motorized or a non-motorized vehicle. For example, the term "vehicle" may refer to car, truck, motorcycle, bicycle, boat, water vessel, underwater vessel, space vessel, train, military equipment, airplane, remote controlled vessel, drone, helicopter, forklift, a ground vehicle, a water vehicle, an air vehicle, a space vehicle, an amphibious vehicle, a robot, a vehicle configured to travel on ground and water, a vehicle configured to travel underground, underwater, on ground, in air, in space, on a surface, or any combination thereof, a vehicle configured to travel on one or more types of pathways (e.g., an amphibious vehicle or an automobile capable of flying), or any vehicle configured with an image capture device. The term "vehicle" may refer to an autonomous vehicle, a semi-autonomous vehicle, a remote-controlled vehicle, a pathway-article assisted vehicle (PAAV), an assisted vehicle, an unassisted vehicle, a robot, or the like. In some examples, a vehicle may be configured to carry one or more occupants (e.g., one or more humans). In other examples, a vehicle may not be configured to carry one or more occupants (e.g., one or more humans). In some examples, a PAAV may include an autonomous vehicle (e.g., a fully autonomous automobile) with a computing device, a driver-assisted vehicle (e.g., a semi-autonomous automobile), an unassisted vehicle, a drone, a remote-controlled vehicle (e.g., a drone), or a human or occupant transport vehicle. A pedestrian pathway may include a sidewalk, a crosswalk, a trail (e.g., a hiking trail, a mining trail), a safety area (e.g., a safety zone on a factory floor), or any other pedestrian trail. As used herein, a pedestrian may refer to any human pathway.

As described herein, a pathway article may generally refer to an article (e.g., a sign) that conveys information about a particular pathway (e.g., to assist a human or vehicle to safely navigate the pathway). In some examples, a pathway article described herein may be configured to be positioned on, in, adjacent to, above, under a pathway. For example, if a pathway is water, a pathway article may be configured to be positioned on the surface of the water, underwater, above the surface of the water, or the like. As another example, if a pathway is air, a pathway article may be configured to be positioned on the ground, in the ground, or in the air above the ground (e.g., the pathway article may be positioned above the ground with or without being attached to the ground). However, these are just examples of positions. A pathway article described herein may be configured to be positioned anywhere with respect to a pathway such that the pathway article may be visible to a vehicle. In some examples, a pathway article described herein may be configured to be attached to a pathway, integrated with a pathway, attached to a pathway marking, or integrated with a pathway marking.

The various examples of pathway articles described herein include primary information and supplemental information. In accordance with this terminology, "primary information" as used herein may, in some examples, include one or more physical properties of a pathway article. For example, physical properties of the pathway article may include the shape of a pathway article, the shapes of various components of the pathway article, and/or graphical information of the pathway article. Graphical information of a pathway article may include any text (e.g., letters, numbers, words, or the like), color(s), and/or graphics of the pathway article. For example, the text "stop" and the color red may constitute graphical information of a stop sign, and the black text and white background may constitute graphical information of a speed limit sign. The graphics of a pathway article may include any graphics driven by electricity, such as one or more lights. One or more physical properties of a pathway article may convey or otherwise represent pathway information.

As described herein, "supplemental information" may include information supplemental to the primary information. For example, supplemental information may include calibration information that is different from and supplemental to the primary information of a pathway article. Supplemental information may include information associated with the pathway article, which may include information representative of one or more physical properties of the pathway article. Information associated with the pathway article may include, for example, at least one of data representative of a unique identification number that uniquely identifies the pathway article; data representative of a type corresponding to the pathway article (for example, the type may include a sign, a channeling device, a traffic control device, a light, or a pathway marking); data representative of a location of the pathway article (e.g., GPS data); data representative of an age of the pathway article; data representative of an installation date of the pathway article; data representative of one or more physical properties of the pathway article (e.g., identification of one or more shapes of the pathway article, identification of graphical information of the pathway article, identification of one or more dimensions of the pathway article, identification of one or more colors of the pathway article, or the like); data representative of scheduled maintenance or repair of the pathway article; data representative of a replacement date for the pathway article; data representative of a manufacturer of the pathway article; data representative of a model number, part number, or lot number of the pathway article; or data representative of other information associated with the pathway article. In some examples, the supplemental information may overlap the primary information. In other examples, the supplemental information may not overlap the primary information.

In some examples, a pathway article may include supplemental information via one or more optical targets integrated with the pathway article. For example, a stop sign may be an example of a pathway article. In accordance with the techniques described herein, the stop sign may include primary information and an optical target that includes supplemental information. In this example, the primary information may include the octagonal shape of the pathway article, the color red, and the word "STOP." The supplemental information may include calibration information that is different from this primary information. As another example, a construction barrel may be an example of a pathway article. In accordance with the techniques described herein, the construction barrel may include primary information an optical target that includes supplemental information. In this example, the primary information may include the cylindrical shape of the pathway article, the colors orange and white, and a yellow light. The supplemental information may include calibration information that is different from this primary information.

In some examples, primary information and supplemental information of a pathway article described herein may be distinguished as follows: the primary information may not be encoded and the supplemental information or a portion thereof may be encoded. For example, supplemental information or a portion thereof may be encoded in a machine-readable representation of data, such as a barcode (e.g., a one-dimensional barcode or a two-dimensional barcode). It is understood that, contrary to its name, a two-dimensional barcode does not necessarily represent information using bars. Rather, consistent with use in the industry, a two-dimensional barcode may include any pattern in two dimensions, which may include rectangles, squares, dots, or other shapes to represent information.

As another example, supplemental information or a portion thereof may be encoded such that it is not visible by the human vision system. For example, supplemental information or a portion thereof may be encoded such that it is only visible in conjunction with light having a certain frequency or wavelength or falling within a certain frequency range or wavelength range (e.g., infrared light or ultraviolet light). Such supplemental information may be described as being infrared supplemental information, ultraviolet supplemental information, or invisible supplemental information. One benefit of supplemental information that is not visible to the human vision system is that the supplemental information would not be available to distract a human (e.g., a driver of a vehicle). Instead, the human would only perceive the primary information resulting in less time analyzing the pathway article or not being confused by supplemental information thereby increasing safety.

In some examples, a pathway article may include supplemental information (e.g., calibration information) such that supplemental information or a portion thereof is invisible to the human vision system but is readable by an image capture device. In such examples, an image of the pathway article captured by an image capture device may include the supplemental information presented by the pathway article. The supplemental information in the image of the pathway article may be visible to the human vision system even though the supplemental information may not be visible to the human vision system on the pathway article when viewed directly by the human vision system. In other examples, a pathway article may include supplemental information (e.g., calibration information) such that the supplemental information or a portion thereof is visible to the human vision system and is readable by an image capture device. In such examples, an image of the pathway article captured by an image capture device described herein may include the supplemental information presented by the pathway article. The supplemental information in the image may be visible to the human vision system.

Reference to information being visible to the human vision system may refer to information being visible with light having a wavelength and/or frequency within the visible light spectrum. Similarly, reference to information being invisible to the human vision system may refer to information being visible with light having a wavelength and/or frequency not within (e.g., outside of) the visible light spectrum. For example, supplemental information that is visible to the human vision system may be integrated with a pathway article using ink, film, or other material that reflects one or more wavelengths in the visible light spectrum. As another example, supplemental information that is invisible to the human vision system may be integrated with a pathway article using ink, film, or other material that reflects one or more wavelengths in a light spectrum different from the visible light spectrum, such as the infrared light spectrum or the ultraviolet light spectrum

As used herein, a pathway article may, in some examples, refer to a traffic control device that includes primary and supplemental information as described herein. For example, a pathway article described herein may be a traffic sign. In this example, the primary information of the pathway article may include at least one of: one or more pathway rules (e.g., speed limit, one way, no parking, or any other pathway rule), one or more warnings (e.g., "slippery when wet" text or graphic, "bridge ices before road" text or graphic, or the like), or information about the pathway (e.g., a street name sign, an exit sign, a destination and distance sign, or the like). As another example, a pathway article described herein may be a channeling device, such as an arrow board, a traffic cone, a construction barrel, a barricade, or the like. As another example, a pathway article described herein may be a pathway surface marking. As another example, a pathway article described herein may be a traffic light. As used herein, the term "traffic" may refer to vehicular traffic or pedestrian traffic.

The various examples of a pathway article described herein may provide one or more potential technical benefits. One example benefit may include enabling the assessment of an image capture device of a vehicle outside of a laboratory testing environment. For example, the techniques described herein enable assessing an image capture device in real-time while the vehicle with which the image capture device is associated is using a pathway. Real-time assessment may avoid reliance on scheduled maintenance, which may prove to be untimely or risky since the scheduled maintenance may be scheduled after a problem arises. One example benefit may include ensuring that an image capture device of a vehicle is calibrated or the like. One example benefit may include ensuring or enhancing the safe operation of a vehicle configured with an image capture device. For example, a vehicle (e.g., an autonomous vehicle or a demi-autonomous vehicle) may be configured to perform one or more autonomous or semi-autonomous vehicle functions based on information captured by an image capture device. However, if the image capture device is not calibrated, then any decision the vehicle may make based on an image captured by the image capture device may be inaccurate, which could jeopardize the safe operation of any autonomous or semi-autonomous function provided by the vehicle.

Additionally, the various examples of a pathway article described herein may provide one or more benefits described herein in various applications. For example, the various examples of a pathway article described herein may benefit operations in warehouses, factories, airports, mining sites, or any location in which a pathway article conveying primary information may be displayed, installed, or otherwise implemented.

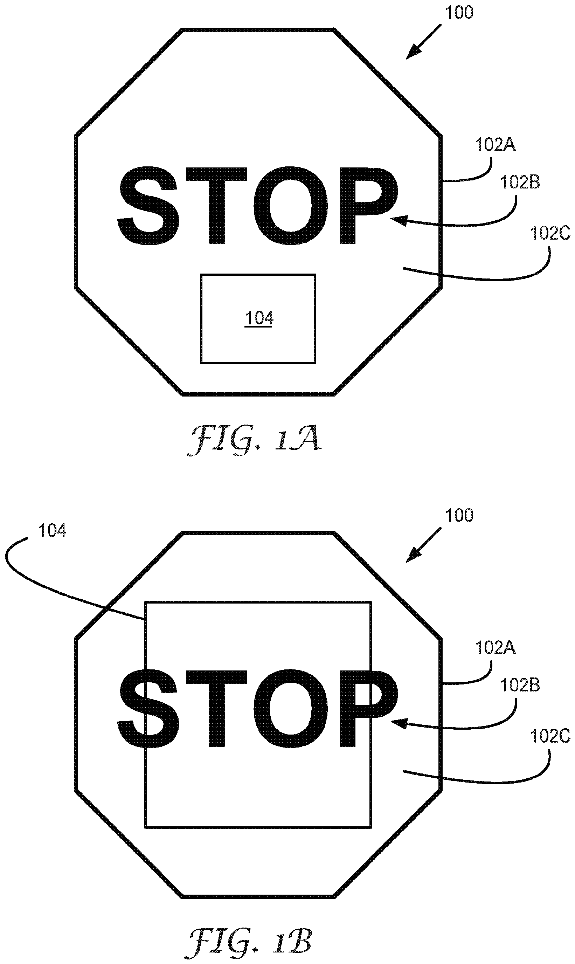

FIG. 1A illustrates an example of a pathway article 100 in accordance with one or more techniques of this disclosure. As shown in the example of FIG. 1A, pathway article 100 may include primary information 102 and supplemental information 104. Pathway article 100 is configured to present primary information 102 and supplemental information 104.

In some examples, supplemental information 104 may be described as an optical target for an image capture device, such as an image capture device of a vehicle described herein (e.g., an image capture device of an autonomous or semi-autonomous vehicle). Supplemental information 104 may be integrated with pathway article 100 in any manner. For example, supplemental information 104 may be integrated with a side of pathway article 100 that is configured to present pathway information. In such an example, supplemental information may be integrated with a surface of pathway article 100 comprising one or more physical properties that represent pathway information. As used herein the phrase "integrated with" may refer to any form of integration. For example, supplemental information 104 may be integrated with a surface of pathway article 100 such that it is attached to the surface, or embedded with or under the surface.

In the example of FIG. 1A primary information 102 of pathway article 100 is shown as including a shape 102A (which may be referred to as a geometry) and graphical information 102B presented on side 102C. In the example shown, shape 102A is an octagon and graphical information 102B is text that spells out the word "STOP." Other examples of pathway article 100 may have different primary information. For example, other examples of pathway article 100 may be any shape (e.g., a square, a triangle, a rectangle, a diamond, a circle, or any other shape) and may have different graphical information.

In some examples, supplemental information 104 may be positioned anywhere on pathway article 100. It is therefore understood that the position of supplemental information 104 shown in the example of FIG. 1A is an example position. For example, FIG. 1B illustrates an example of a pathway article 100 in accordance with one or more techniques of this disclosure showing a different example position of supplemental information 104. In the example shown in FIG. 1B, supplemental information 104 may be integrated with pathway article 100 such that supplemental information 104 is invisible to the human vision system or is less perceptible by the human vision system than primary information 102 (e.g., primary information 102B).

Supplemental information 104 may be readable by an image capture device (e.g., a camera or a video camera). Supplemental information 104 may include calibration information for calibrating an image capture device. For example, calibration information may be used to calibrate one or more components, parameters, or functions of an image capture device. In some examples, calibrating one or more components, parameters, or functions may refer to at least one of: adjusting one or more components, parameters, or functions, determining whether to adjust one or components, parameters, or functions, determining to adjust one or more components, parameters, or functions, determining not to adjust one or more components, parameters, or functions, assessing one or more components, parameters, or functions, assessing whether the image capture device is calibrated.

In some examples, an image capture device that captured an image of calibration information presented by pathway article 100 may be calibrated based on the captured image. In other examples, a second image capture device may be calibrated based on an image of calibration information presented by pathway article 100 captured by a first image capture device.

One or more parameters or functions of an image capture device may include position information of the image capture device, rotation information of the image capture device, one or more intrinsic distortion parameters (e.g., focal length parameter(s), principal point parameter(s), lens distortion parameter(s), or the like), one or more extrinsic camera parameters (e.g., for stereo vision), resolution, contrast transfer function information, grayscale, white balance, gain, size of an image (e.g., pixel count), color, frame rate, or other parameters. In some examples, one or more camera parameters may relate to a location of the image capture device. The location of the image capture device may be described by a 3x3 rotation matrix and/or a 3x1 translation. For example, based on calibration information presented by pathway article 100 captured by an image capture device, the image capture device may adjust one or more parameters or functions.

As one example, based on calibration information presented by pathway article 100 captured by an image capture device, the image capture device may be moved along an x-axis, a y-axis, a z-axis, or any combination thereof to adjust the position information. As another example, the image capture device may be rotated along an x-axis, a y-axis, a z-axis, or any combination thereof to adjust the rotation information. As another example, the gain, white balance, and/or frame rate may be respectively increased or decreased to adjust such parameters. As used herein, adjusting a parameter or function may include increasing, decreasing, or modifying the parameter or function. For example, adjusting a parameter or function may include modifying one or more values (e.g., one or more values corresponding to one or more variables associated with a parameter or function).

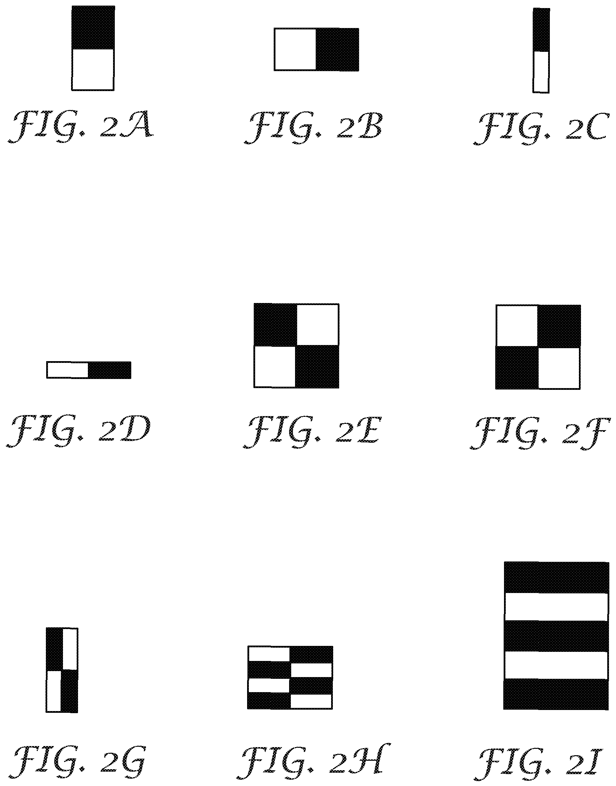

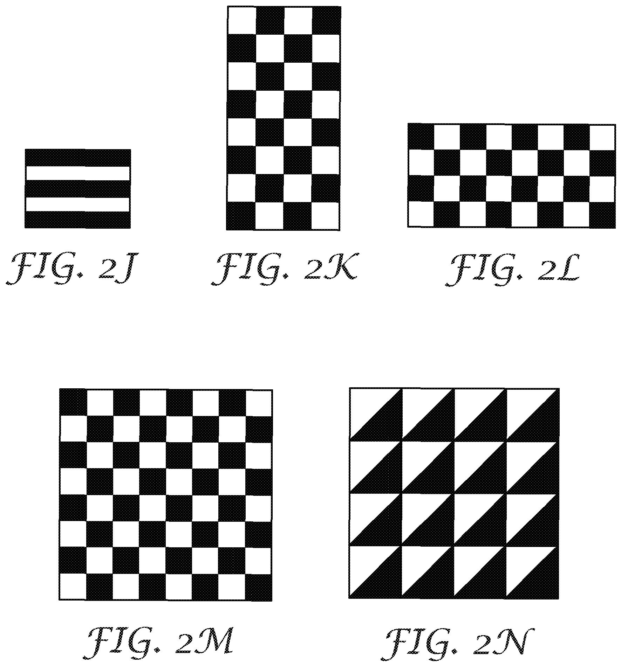

In some examples, calibration information may include at least two colors. The colors may have contrast (e.g., high contrast, such as black and white), such as in a captured image that includes the calibration information. In some examples, calibration information may include a checkerboard test pattern, a resolution test chart, or any information configured to test a parameter or function of an image capture device. For example, a checkerboard test pattern may include two or more blocks of different color. In such an example, a checkerboard test pattern may include a plurality of squares, a plurality of rectangles, a combination of squares and rectangles, a plurality of alternating shapes (e.g., triangles positioned in an alternating fashion), or the like. FIGS. 2A-2N illustrate various examples of calibration information in accordance with one or more techniques of this disclosure. In some examples, a checkerboard test pattern may be used to compute (e.g., determine) one or more parameters of an image capture device, such as one or more intrinsic parameters and/or one or more extrinsic parameters.

In some examples, calibration information may include information associated with pathway article 100. For example, the number of shapes (e.g., squares) in a checkerboard pattern test pattern may represent information associated with pathway article 100, such as a type corresponding to pathway article 100 or other information associated with pathway article 100. As another example, the number of columns in a checkerboard pattern test may represent information associated with pathway article 100. As another example, the number of rows in a checkerboard pattern test may represent information associated with pathway article 100. As another example, the color of the top left shape in a checkerboard test pattern may represent information associated with pathway article 100. These various examples may be used in any combination to represent information associated with pathway article 100.

In some examples, supplemental information 104 may be used to calibrate a resolution and/or a contrast transfer function of an image capture device. For example, supplemental information 104 may include a resolution test chart having a plurality of bars or lines with varying thickness and space in between, which may be used to calibrate resolution and contrast transfer function information. The bars or lines may become smaller and closer together when the resolution is higher. A captured image of a resolution test chart may be used to determine the resolution at which the image capture device captured the image.

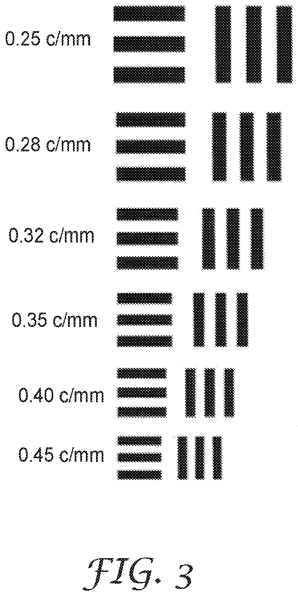

In some examples, calibration information may include a resolution test chart that includes a pattern consisting of a plurality of three-bar groups, where each three-bar group has different dimensions relative to the other three-bar groups. The dimensions of each three-bar group may include the width of the bars and the spacing between the bars. In one example, the resolution test chart may be a 1951 United States Air Force (USAF) resolution test chart conforming to a standard, such as MIL-STD-150A. FIG. 3 illustrates an example of a resolution test chart.

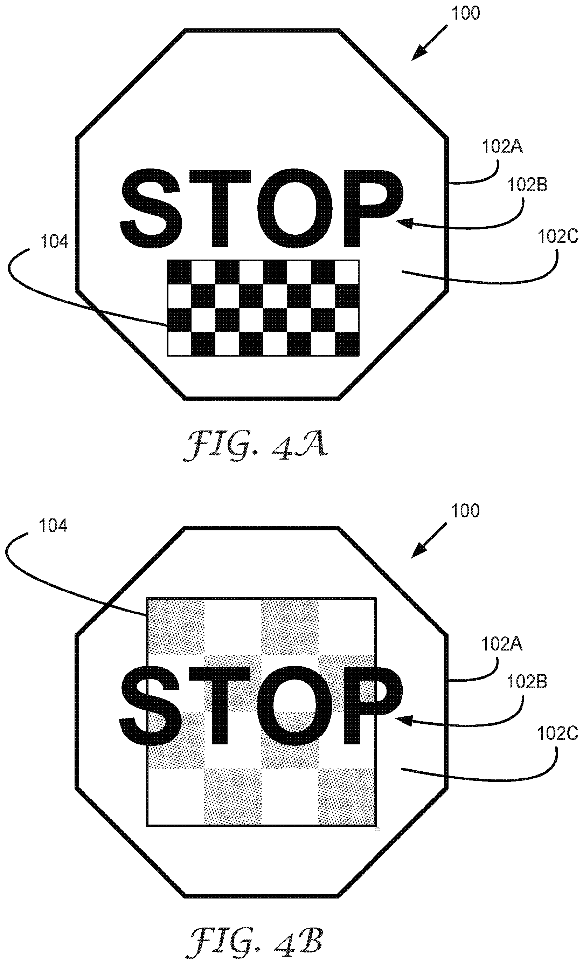

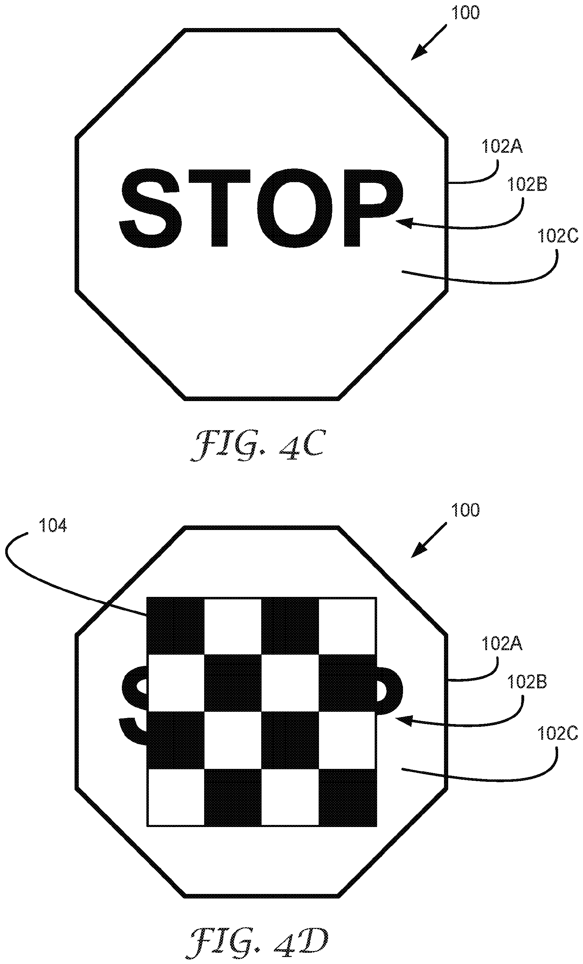

FIGS. 4A-D illustrate various examples of pathway article 100 in accordance with one or more techniques of this disclosure. In the example of FIG. 4A, supplemental information 104 includes an example checkerboard test pattern, such as the example checkerboard test pattern shown in FIG. 2L. In the example of FIG. 4B, supplemental information 104 includes an example checkerboard test pattern. Primary information 102B and supplemental information 104 in the example of FIG. 4B may both be visible to the human vision system. Conversely, FIGS. 4C and 4D illustrate an example in which supplemental information 104 is invisible to the human vision system, but visible to an image capture device. For example, FIG. 4C illustrates an example of pathway article 100 viewed from a first viewpoint, where the first viewpoint is a human vision system. As shown in FIG. 4C, it appears that the example of pathway article 100 only includes primary information 102. However, FIG. 4D shows that the example of pathway article 100 shown in FIG. 4C includes supplemental information 104 when viewed from a second viewpoint, where the second viewpoint is an image capture device. It is understood that an image of the example of pathway article 100 shown in FIGS. 4C and 4D captured by such an image capture device would include supplemental information 104.

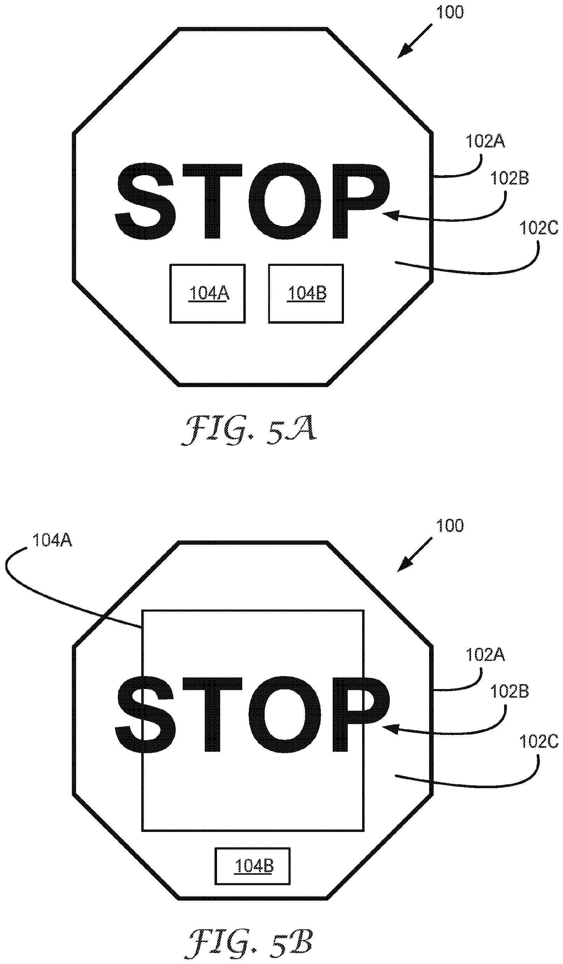

FIG. 5A illustrates an example of a pathway article 100 in accordance with one or more techniques of this disclosure. As shown in the example of FIG. 5A, pathway article 100 may include primary information 102 and supplemental information 104, wherein supplemental information 104 includes first supplemental information 104A, and second supplemental information 104B. Pathway article 100 is configured to present primary information 102, first supplemental information 104A, and second supplemental information 104B. In some examples, first supplemental information 104A may be described as a first optical target for an image capture device and second supplemental information 104B may be described as a second optical target for the image capture device. First supplemental information 104A and second supplemental information 104B may be positioned relative to each other such that second supplemental information 104B may be used as a reference marker for an image capture device to find first supplemental information 104A, or vice versa.

In some examples, first supplemental information 104A and second supplemental information 104B may be positioned anywhere on pathway article 100, such that both first supplemental information 104A and second supplemental information 104B are readable (e.g., readable by an image capture device). It is therefore understood that the position of first supplemental information 104A and the position of second supplemental information 104B shown in the example of FIG. 5A constitute example positions. For example, FIG. 5B illustrates an example of a pathway article 100 in accordance with one or more techniques of this disclosure showing different example positions of first supplemental information 104A and second supplemental information 104B. In some examples, first supplemental information 104A and/or second supplemental information 104B may be integrated with pathway article 100 such that they are invisible to the human vision system or are less perceptible by the human vision system than primary information 102 (e.g., primary information 102B).

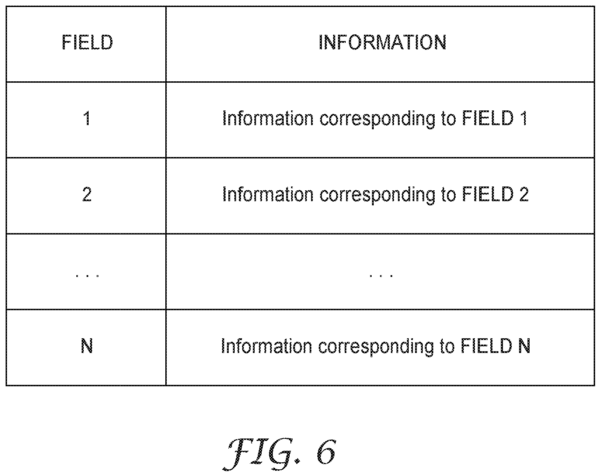

First supplemental information 104Amay include calibration information, and second supplemental information 104B may include information associated with pathway article 100. Second supplemental information 104B may be encoded in a machine-readable representation of data, such as a barcode (e.g., a one-dimensional barcode or a two-dimensional barcode). The machine-readable representation of data may be decoded, which may result in the decoded data having a data structure (e.g., a table with two columns: a data field column and an information column having an entry for each data field in the data field column). FIG. 6 illustrates a simplified example of a data structure corresponding to data extracted from (e.g., decoded from) second supplemental information 104B.

Second supplemental information 104B may be used (e.g., read by an image capture device) to gather or learn information about pathway article 100. For example, second supplemental information 104B may include information about pathway article 100, information about what an image capture device should expect to detect (e.g., identification of what first supplemental information 104A is), and how an image capture device should use captured data. Information associated with the pathway article may include, for example, at least one of data representative of a unique identification number that uniquely identifies the pathway article; data representative of a type corresponding to the pathway article (for example, the type may include a sign, a channeling device, a traffic control device, a light, or a pathway marking); data representative of a location of the pathway article (e.g., GPS data); data representative of an age of the pathway article; data representative of an installation date of the pathway article; data representative of one or more physical properties of the pathway article (e.g., identification of one or more shapes of the pathway article, identification of graphical information of the pathway article, identification of one or more dimensions of the pathway article, identification of one or more colors of the pathway article, or the like); data representative of scheduled maintenance or repair of the pathway article; data representative of a replacement date for the pathway article; data representative of a manufacturer of the pathway article; data representative of a model number, part number, or lot number of the pathway article; or data representative of other information associated with the pathway article. For example, referring to FIG. 6, FIELD 1 may correspond to a unique identifier, and in such an example, the information corresponding to FIELD 1 would include the unique identifier.

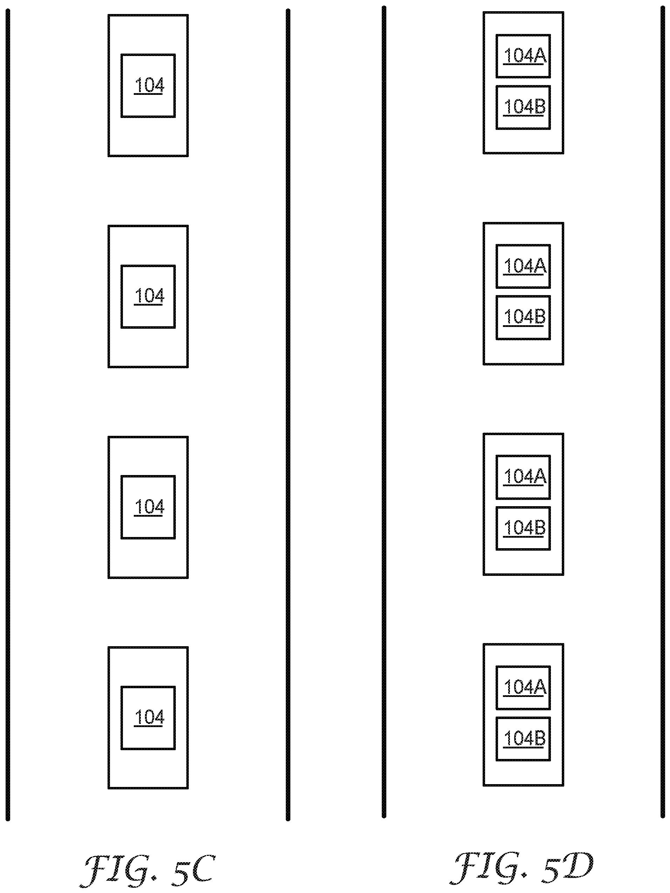

FIGS. 5C and 5D illustrate two examples including a plurality of pathway articles (i.e., each dashed pathway marker in the examples) that include supplemental information. For example, FIG. 5C illustrates a plurality of pathway articles, where the type of each pathway article is a pathway marker. In the example illustrated in FIG. 5C, each dashed pathway article includes supplemental information 104. In other examples, every other, or every third, or every nth (when n is an integer) pathway article may include supplemental information 104. Supplemental information 104 may include information such as scale and distance for use in calibrating frame rate. Calibration of frame rate may be done in conjunction with other information, such as speedometer information and/or GPS information. In the example illustrated in FIG. 5D, each dashed pathway article includes first supplemental information 104A and second supplemental information 104B. In other examples, every other, or every third, or every nth (when n is an integer) pathway article may include first supplemental information 104A and second supplemental information 104B. First supplemental information 104A and/or second supplemental information 104B may include information such as scale and distance for use in calibrating frame rate. Calibration of frame rate may be done in conjunction with other information, such as speedometer information and/or GPS information.

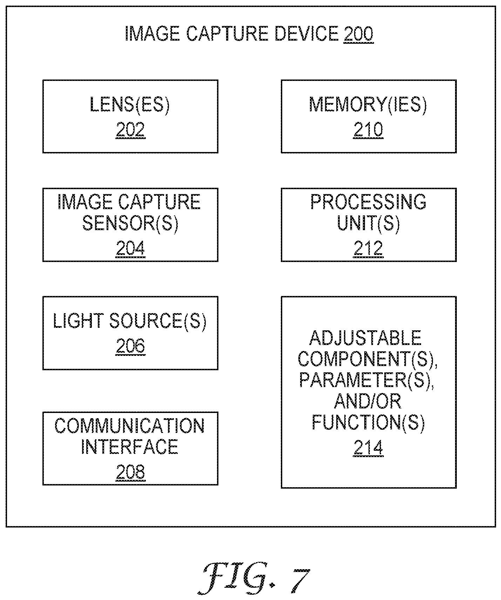

FIG. 7 is block diagram illustrating an example image capture device 200, which may be configured to capture one or more images of a pathway article described herein. As described herein, supplemental information (e.g., supplemental information 104, first supplemental information 104A, and/or second supplemental information 104B) of a pathway article (e.g., pathway article 100) may be readable by an image capture device (e.g., image capture device 200). In some examples, supplemental information that is "readable" by an image capture device may refer to the image capture device being configured to capture an image that includes the supplemental information. In such examples, the term readable may refer to the supplemental information being visible to the image capture device. In other examples, supplemental information that is "readable" by an image capture device may refer to the image capture device being configured to capture an image that includes the supplemental information, and interpret, read, decode, analyze, or otherwise process the supplemental information present in the image.

The example of image capture device 200 shown in FIG. 7 may include the requisite hardware and software to capture an image. In some examples, image capture device 200 may include the requisite hardware and software to interpret, read, decode, analyze, or other process information contained within a captured image.

In some examples, image capture device 200 may include one or more lenses 202, one or more image capture sensors 204, one or more light sources 206, a communication interface 208, one or more memories 210 for storing one or more captured images, one or more processing units 212, and one or more adjustable components, parameters, or functions 214. Image capture device 200 may include more components or less components relative to the example depicted in FIG. 7 in other examples. For example, image capture device 200 may not include one or more light sources 206.

While shown separately from one or more adjustable components, parameters, or functions 214 in the example shown in FIG. 7, it is understood that components 202-212 may be adjustable or include adjustable parameters or functions. One or more adjustable components, parameters, or functions 214 of image capture device 200 may include position information, rotation information, one or more intrinsic distortion parameters, one or more extrinsic camera parameters (e.g., for stereo vision), resolution, contrast transfer function information, grayscale, white balance, gain, size, color, frame rate, or other parameters.

One or more light sources 206 may emit light within the visible light spectrum and/or light outside of the visible light spectrum. For example, a first light source of image capture device 200 may be a visible light source, and a second light source of image capture device 200 may be an infrared light source or an ultraviolet light source.

Communication interface 208 may be configured to communicatively couple image capture device 200 to one or more other computing devices (e.g., a server, a computing device of a vehicle, another image capture device, and/or any other computing device) over one or more wired or wireless connections, one or more network connections, or one or more other connections. For example, communication interface 208 may be configured to communicatively couple image capture device 200 to one or more networks or connections over which data may be transmitted and/or received by image capture device 200. In some examples, image capture device 200 may be configured to transmit a captured image or any pathway article data described herein to a second computing device (e.g., a server or a computing device of a vehicle) configured to interpret, decode, read, analyze, or otherwise process supplemental information within the captured image. In other examples, image capture device 200 may be configured to interpret, read, decode, analyze, or otherwise process supplemental information within the captured image with or without the assistance of a second computing device.

Image capture device 200 may be configured to convert light or electromagnetic radiation sensed by one or more image capture sensors 204 into information, such as digital image or bitmap comprising a set of pixels. Each pixel may have chrominance and/or luminance components that represent the intensity and/or color of light or electromagnetic radiation. In accordance with the techniques described herein, an image of pathway article 100 captured by image capture device 200 includes pixels corresponding to supplemental information 104. As used herein, reference to supplemental information 104 may refer to supplemental information 104, first supplemental information 104A, and/or second supplemental information 104B.

One or more image capture sensors 204 may, in some examples, include semiconductor charge-coupled devices (CCD), active pixel sensors in complementary metal-oxide-semiconductor (CMOS), N-type metal-oxide-semiconductor (NMOS, Live MOS), or digital sensor technologies. Digital sensors may include flat panel detectors. Image capture device 200 may include at least two different sensors for detecting light in two different wavelength spectrums (e.g., the visible light spectrum, and at least one of the infrared light spectrum or the ultraviolet light spectrum).

In some examples, image capture device 200 may be configured to capture a plurality images at a defined frame rate. The defined frame rate may be adjustable and may be dependent upon one or more factors, such as vehicle speed. The defined frame rate may be calibrated using supplemental information 104 captured by image capture device 200.

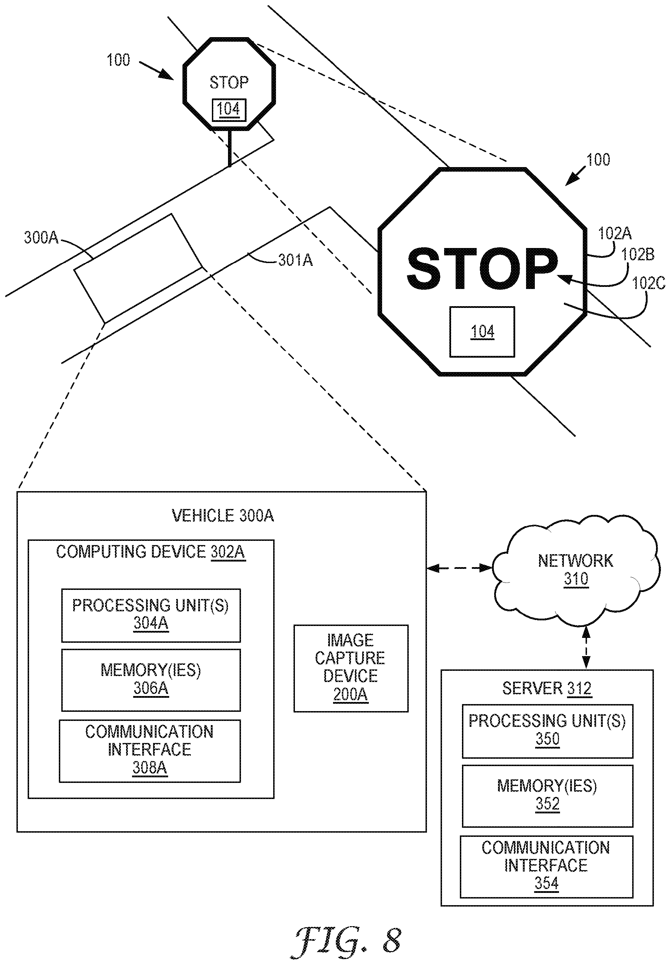

FIG. 8 illustrates a system including a vehicle having an image capture device and a pathway article in accordance with one or more techniques of this disclosure. Image capture device 200 may be integrated with a vehicle, such as in the example system illustrated in FIG. 8, which depicts vehicle 300A including at least one image capture device 200 shown as image capture device 200A. Vehicle 300A is shown on pathway 301A. Image capture device 200A is one example of image capture device 200.

In some examples, vehicle 300A may include computing device 302A, which may include one or more processing 304A, one or more memories 306A, and communication interface 308A. In some examples, computing device 302A may be a vehicle head unit. One or more processing units 304A may be configured to store data (e.g., an image captured by image capture device 200A and/or any pathway article data as described herein) in one or more memories 306A. Communication interface 308A may be configured to communicatively couple computing device 302A to one or more other computing devices (e.g., a server such as server 312, image capture device 200A, and/or any other computing device) over one or more wired or wireless connections, one or more network connections, or one or more other connections. For example, communication interface 308A may be configured to communicatively couple computing device 302A to one or more networks or connections over which data may be transmitted and/or received by computing device 302A. In some examples, computing device 302A may be configured to transmit an image captured by image capture device 200A or any pathway article data described herein to a second computing device (e.g., server 312 or image capture device 200A) configured to interpret, decode, read, analyze, or otherwise process supplemental information within the captured image. In other examples, computing device 302A may be configured to interpret, read, decode, analyze, or otherwise process supplemental information within the captured image with or without the assistance of a second computing device.

In the example of FIG. 8, server 312 may be configured to receive data from and/or transmit data to one or more vehicles, where vehicle 300A is an example of one vehicle. Server 312 may include one or more processing 350, one or more memories 352, and communication interface 354. In some examples, server 312 may be a database server or a web server. In some examples, server 312 may be a single server. In other examples, server 312 may be a plurality of servers. For example, server 312 may conceptually represent a cloud of servers. One or more processing units 350 may be configured to store data (e.g., an image captured by image capture device 200A and/or any pathway article data as described herein) in one or more memories 352. In some examples, one or more processing units 350 may be configured to perform any image processing described herein. In such examples, one or more processing units 350 may be configured to receive an image captured by an image capture device and perform image processing thereon.

Communication interface 354 may be configured to communicatively couple server 312 to one or more other computing devices (e.g., one or more computing devices (such as computing device 302A) of one or more vehicles, one or more image capture devices (such as image capture device 200A), one or more servers, and/or any other computing device) over one or more wired or wireless connections, one or more network connections, or one or more other connections. For example, communication interface 354 may be configured to communicatively couple server 312 to one or more networks or connections over which data may be transmitted and/or received by server 312. In some examples, server 312 may be configured to transmit any pathway article data described herein to a second computing device (e.g., a computing device of a vehicle and/or an image capture device) configured to interpret, decode, read, analyze, or otherwise process the pathway article data, such as in conjunction with performing image processing on an image. In other examples, server 312 may be configured to interpret, read, decode, analyze, or otherwise process pathway article data, such as in conjunction with performing image processing as described herein with or without the assistance of a second computing device. For example, server 312 may be configured to process supplemental information within a captured image and and/or pathway article data. Regarding pathway article data, server 312 may be configured to perform one or more calculations (e.g., calculate an average) on pathway article data stored in one or more memories 352.

Based on an image captured by image capture device 200A, vehicle 300A may be configured to perform one or more autonomous or semi-autonomous vehicle functions, such as driving the car without driver input, braking upon identifying a road hazard, maintaining speed relative to a second moving vehicle, or any other autonomous or semi-autonomous function. However, if image capture device 200A is not calibrated, then any decision vehicle 300A may make based on an image captured by image capture device 300A may be inaccurate, which could jeopardize the safe operation of any autonomous or semi-autonomous function provided by vehicle 300A. One or more techniques of this disclosure may enable the determination of whether image capture device 200A is calibrated while vehicle 300A is using a pathway (e.g., traveling on a pathway). One or more techniques of this disclosure enable the adjustment of one or more one or more components, parameters, or functions of an image capture device it is determined that the image capture device is not calibrated while vehicle 300A is using a pathway (e.g., traveling on a pathway).

During operation of vehicle 300, image capture device 200 may be configured capture an image of pathway article 100. For example, image capture device 200 may be configured to capture an image of pathway article 100 as vehicle 300 approaches pathway article 100. The captured image may include supplemental information 104, which may be used by image capture device 200 and/or a second computing device (e.g., a vehicle head unit of vehicle 300) to calibrate image capture device 200 and/or learn information about pathway article 100.

In the example of FIG. 8, vehicle 300 includes processing unit 302 communicably coupled to image capture device 200A via, for example, a wired or wireless connection. Image capture device 200A may be configured to capture an image of pathway article 100. Image capture device 200A may be configured to store the captured image in one or more memories 210A. One or more memories 210A may include short-term memory space (e.g., volatile memory space, buffer space, or the like) or long-term memory space (e.g., non-volatile memory space or the like).

In some examples, image capture device 200A may be configured to perform, via one or more processing units 212, image processing on the captured image. As used herein "image processing" may refer to interpreting, reading, decoding, assessing, and/or analyzing supplemental information present in the image of a pathway article captured by an image capture device.

Based on the image processing performed by image capture device 200A, image capture device 200A may be configured to reach a calibration determination and/or a pathway article disrepair determination. A calibration determination may be indicative of whether image capture device 200A is calibrated. In some examples, the calibration determination may be a first calibration determination or a second calibration determination. The first calibration determination may be that image capture device 200A is calibrated, and the second calibration determination may be that image capture device 200A is not calibrated. Otherwise described, image capture device 200A may be configured to determine whether image capture device 200A is or is not calibrated based on the image processing performed on calibration information of supplemental information 104. Reference to supplemental information 104 may refer to supplemental information 104, first supplemental information 104A, and/or second supplemental information 104B as described herein.

For example, image capture device 200A may be configured to determine that it is or is not calibrated based on one or more characteristics of the calibration information in the image captured by image capture device 200A compared to what the one or more characteristics should look like (e.g., an original and/or artifact-free image of the calibration information). For example, image capture device 200A may be configured to compare calibration information of two or more images: calibration information of a first image and calibration information of a second image, where the first image may be the image of pathway article 100 captured by image capture device 200A and the second image may be an original and/or artifact-free version of the calibration information in the first image. Image capture device 200A may be configured to compensate for various factors (e.g., the distance and angle at which image capture device 200A captured the image of pathway article 100) to enable a closer and more accurate comparison between the first and second images. Less differences between the calibration information in the first image and the second image may equate to less need for calibration adjustments, whereas more differences between the calibration information in the first image and the second image may equate to greater need for one or more calibration adjustments. No differences or less differences may result in the first calibration determination being reached, and more differences may result in the second calibration determination being reached.

A pathway article disrepair determination (or, more succinctly, disrepair determination) may be indicative of whether pathway article 100 is in disrepair (e.g., whether pathway article 100 is in good condition or poor condition). In some examples, the disrepair determination may be a first disrepair determination or a second disrepair determination. The first disrepair determination may be that pathway article 100 is in disrepair (e.g., is in a poor condition), and the second disrepair determination may be that pathway article 100 is not in disrepair (e.g., is in good condition). Otherwise described, image capture device 200A may be configured to determine whether pathway article 100 in the image captured by image capture device 200A is or is not in disrepair based on the image processing performed on supplemental information 104. In some examples, the first disrepair determination may be reached if the quality or resolution of the calibration information in an image has deteriorated below a threshold level. Reference to supplemental information 104 may refer to supplemental information 104, first supplemental information 104A, and/or second supplemental information 104B as described herein.

For example, image capture device 200A may be configured to determine that pathway article 100 is or is not in disrepair based on the quality (e.g., readability) of the calibration information of supplemental information in the image captured by image capture device 200A. For example, if the calibration information is unreadable or otherwise unrecognizable in the image, image capture device 200A may reach at least one of the following determinations: the second calibration determination or the first disrepair determination. As another example, less differences between the calibration information in the technique involving a comparison of calibration information of a first image and calibration information of a second image may result in the second disrepair determination being reached, whereas more differences may result in the first disrepair determination being reached.

In some examples, image capture device 200A may be configured to send the captured image of pathway article 100 and/or data derived from the image processing performed on the captured image to a server (e.g., server 312) over a network (e.g., network 310) for storage on the server. Individually or jointly, such information may be referred to as pathway article data. For example, pathway article data may include one or more of the following: a captured image or data derived from image processing performed on the captured image. Data derived from the image processing performed on the captured image may include, for example, data representative of a calibration determination, data representative of a disrepair determination, data representative of one or more image capture device parameters or functions, the number of blocks in a checkerboard test pattern, the brightness of the pixels in the image (e.g., the brightness of the pixels in the region(s) of the image corresponding to supplemental information 104), the relative location of different information on the pathway article (e.g., the location of supplemental information 104A relative to other information such as supplemental information 104B, the location of supplemental information 104B relative to other information such as supplemental information 104A), or any other data derived from the image processing. Network 310 may be a wired network, a wireless network, or a combination thereof. Information stored on server 312 may be accessible by other image capture devices of other vehicles. Image capture devices of other vehicles may similarly capture an image of pathway article 100 (i.e., the same pathway article), and send similar information to server 312 for storage thereon, which may enable one or more additional determinations and/or affect any determinations made during image processing. In some examples, the terms "data" and "information" may be synonymous. In other examples, the terms "data" and "information" may not be synonymous.

In some examples, pathway article data may include data indicative of any determinations derived from the image processing. Data derived from the image processing may include data indicative of any differences between the calibration information in the captured image and the calibration information in the original and/or artifact-free version. Data derived from the image processing may include data corresponding to information associated with pathway article 100 in the captured image, such as data extracted from (e.g., decoded from) second supplemental information 104B (e.g., the unique identifier corresponding to pathway article 100). Data derived from the image processing may include data indicative of any determinations derived from the image processing.

One problem with optical targets integrated with pathway articles as described herein is that the viewing of an optical target is subject to change based on environmental factors (e.g., sunlight, precipitation, dirt, dust, snow, ice, wear, etc.). For example, one or more environmental factors may affect the pathway article itself and/or affect the image capture device. As an example, low sunlight may impede or otherwise reduce the quality (e.g., compared to expected quality) of an image of the pathway article captured by an image capture device. As another example, precipitation may adversely affect the space between the pathway article and the image capture device thereby resulting in reduced image quality. Accordingly, the source of any errors or discrepancies in supplemental information captured by an image capture device may be ambiguous as to whether there is a problem with the pathway article (e.g., is in a state of disrepair), or the image capture device (e.g., is not calibrated).

Utilization of server 312 may enable the determination of whether a problem with an image captured by an image capture device originates from the pathway article, the image capture device, or neither. For example, as multiple vehicles pass a particular pathway article, each vehicle may send pathway article data concerning the particular pathway article to server 312 via, for example, an image capture device (or a computing device of the vehicle, as described below). In some examples, server 312 may be configured to calculate a running average of pathway article data stored on server 312, and may be configured to store the running average on server 312. For example, pathway article data may include values corresponding to intrinsic distortion parameters of an image capture device, such as focal length, principal point, lens distortion, or the like; and a running average of such data may be stored on server 312. As another example, pathway article data may include the number of blocks in a checkerboard test pattern, the brightness of the pixels in the image (e.g., the brightness of the pixels in the region(s) of the image corresponding to supplemental information 104), the relative location of different information on the pathway article (e.g., the location of supplemental information 104A relative to other information such as supplemental information 104B, the location of supplemental information 104B relative to other information such as supplemental information 104A), or other information. In other examples, server 312 may be configured send pathway article data corresponding to a particular pathway article to vehicle for calculating the running average at the vehicle (e.g., via an image capture device or a computing device of the vehicle).

Aggregating pathway article data on server 312 may be used to establish a dynamic baseline for determining how a first image capture device is performing relative to other image capture devices for a particular pathway article, and determining whether a problem exists with the particular pathway article and/or the first image capture device. For example, instead of determining that an image capture device needs to be recalibrated and/or that the pathway article is in disrepair, a null determination may be issued since the running average information indicates that the issue(s) with the image captured by the image capture device indicates that the severe weather is the cause. As another example, instead of determining that an image capture device needs to be recalibrated due to issue(s) with the image, the running average information corresponding to the particular sign may indicate that in light of the running average, the image issue(s) must stem from a problem with pathway article instead of the image capture device.

In some examples, image capture device 200A may be configured to reach a calibration determination and/or a pathway article disrepair determination based on the image processing performed by image capture device 200A and/or pathway article data stored on server 312. For example, image capture device 200A may be configured to capture an image of pathway article 100, which may include unique identification information (e.g., a unique identification number). Image capture device 200A may discover the unique identification information corresponding to pathway article 100 during image processing. Upon determining the unique identification information corresponding to pathway article 100, image capture device 200A may be configured to request pathway article data corresponding to the same unique identification information from server 312. In response to the request, server 312 may send pathway article data (e.g., other captured images of the same pathway article 100, running average information, or the like) corresponding to the same unique identification information to image capture device 200A.

In some examples, supplemental information 104B may be used as a reference marker in relation to supplemental information 104A, or vice versa. In such examples, this known relationship may be leveraged during image processing to help find either supplemental information 104A or 104B.

As described herein, reference to a device (e.g., an image capture device, a computing device, a server, or another device) performing a process or being configured to perform the process may refer to one or more processing units of that device performing the process or being configured to perform the process. For example, reference to image capture device 200A performing image processing or being configured to perform image processing is understood as also disclosing that, in some examples, one or more processing units 212 of image capture device 200A may perform the image processing or may be configured to perform the image processing. Similarly, as described herein, reference to a one or more processing units of a device performing a process or being configured to perform the process may refer more broadly to that device performing the process or being configured to perform the process. For example, reference to one or more processing units 304A performing image processing or being configured to perform image processing is understood as also disclosing that, in some examples, computing device 304A may perform the image processing or may be configured to perform the image processing. As another example, reference to server 312 performing image processing or being configured to perform image processing is understood as also disclosing that, in some examples, one or more processing units 350 of server 312 may perform the image processing or may be configured to perform the image processing.

In other examples, image capture device 200A may be configured to send a captured image of pathway article 100 to a different, second computing device for image processing, such as computing device 302A of vehicle 300A. In such examples, image capture device 200A may be configured to send the captured image of pathway article 100 to computing device 302A via, for example, a wired connection, a wireless connection, or a combination thereof. Computing device 302A (e.g., one or more processing units 304A) may be configured to receive the captured image that was captured by image capture device 200A. One or more processing units 304A may be configured to store the received captured image in one or more memories 306A. One or more memories 306A may include short-term memory space (e.g., volatile memory space, buffer space, or the like) or long-term memory space (e.g., non-volatile memory space or the like). Computing device 302A may be configured to perform, via one or more processing units 304A, image processing on the captured image received from image capture device 200A.

Based on the image processing performed by one or more processing units 304A of computing device 302A, one or more processing units 304A may be configured to reach a calibration determination and/or a pathway article disrepair determination. A calibration determination may be indicative of whether image capture device 200A is calibrated. In some examples, the calibration determination may be a first calibration determination or a second calibration determination. The first calibration determination may be that image capture device 200A is calibrated, and the second calibration determination may be that image capture device 200A is not calibrated. Otherwise described, one or more processing units 304A may be configured to determine whether image capture device 200A is or is not calibrated based on the image processing performed on calibration information of supplemental information 104 in the captured image received from image capture device 200A. Reference to supplemental information 104 may refer to supplemental information 104, first supplemental information 104A, and/or second supplemental information 104B as described herein.

For example, one or more processing units 304A may be configured to determine that image capture device 200A is or is not calibrated based on one or more characteristics of the calibration information in the image captured by image capture device 200A compared to what the one or more characteristics should look like (e.g., an original and/or artifact-free image of the calibration information). For example, one or more processing units 304A may be configured to compare calibration information of two or more images: calibration information of a first image and calibration information of a second image, where the first image may be the image of pathway article 100 captured by image capture device 200A and the second image may be an original and/or artifact-free version of the calibration information in the first image. One or more processing units 304A may be configured to compensate for various factors (e.g., the distance and angle at which image capture device 200A captured the image of pathway article 100) to enable a closer and more accurate comparison between the first and second images. Less differences between the calibration information in the first image and the second image may equate to less need for calibration adjustments, whereas more differences between the calibration information in the first image and the second image may equate to greater need for one or more calibration adjustments. No differences or less differences may result in the first calibration determination being reached, and more differences may result in the second calibration determination being reached.

A pathway article disrepair determination (or, more succinctly, disrepair determination) may be indicative of whether pathway article 100 is in disrepair (e.g., whether pathway article 100 is in good condition or poor condition). In some examples, the disrepair determination may be a first disrepair determination or a second disrepair determination. The first disrepair determination may be that pathway article 100 is in disrepair (e.g., is in a poor condition), and the second disrepair determination may be that pathway article 100 is not in disrepair (e.g., is in good condition). Otherwise described, one or more processing units 304A may be configured to determine whether pathway article 100 in the image captured by image capture device 200A is or is not in disrepair based on the image processing performed on supplemental information 104. In some examples, the first disrepair determination may be reached if the quality or resolution of the calibration information in an image has deteriorated below a threshold level. Reference to supplemental information 104 may refer to supplemental information 104, first supplemental information 104A, and/or second supplemental information 104B as described herein.

For example, one or more processing units 304A may be configured to determine that pathway article 100 is or is not in disrepair based on the quality (e.g., readability) of the calibration information of supplemental information in the image captured by image capture device 200A. For example, if the calibration information is unreadable or otherwise unrecognizable in the image, one or more processing units 304A may reach at least one of the following determinations: the second calibration determination or the first disrepair determination. As another example, less differences between the calibration information in the technique involving a comparison of calibration information of a first image and calibration information of a second image may result in the second disrepair determination being reached, whereas more differences may result in the first disrepair determination being reached.

In some examples, one or more processing units 304A may be configured to send the captured image of pathway article 100 and/or data derived from the image processing performed on the captured image to a server (e.g., server 312) over a network (e.g., network 310) for storage on the server. Individually or jointly, such information may be referred to as pathway article data. For example, pathway article data may include one or more of the following: a captured image or data derived from image processing performed on the captured image. Data derived from the image processing performed on the captured image may include, for example, data representative of a calibration determination, data representative of a disrepair determination, data representative of one or more image capture device parameters or functions, or any other data derived from the image processing. Information stored on server 312 may be accessible by other image capture devices and/or computing devices of other vehicles. Image capture devices of other vehicles may similarly capture an image of pathway article 100 (i.e., the same pathway article), and similarly send the image of pathway article to a respective computing device for each of those other vehicles. The computing devices for these other vehicles may send similar information (e.g., pathway article data) to server 312 for storage thereon, which may enable one or more additional determinations and/or affect any determinations made during image processing.

In some examples, pathway article data may include data indicative of any determinations derived from the image processing. Data derived from the image processing may include data indicative of any differences between the calibration information in the captured image and the calibration information in the original and/or artifact-free version. Data derived from the image processing may include data corresponding to information associated with pathway article 100 in the captured image, such as data extracted from (e.g., decoded from) second supplemental information 104B (e.g., the unique identifier corresponding to pathway article 100). Data derived from the image processing may include data indicative of any determinations derived from the image processing.

In some examples, one or more processing units 304A may be configured to reach a calibration determination and/or a pathway article disrepair determination based on the image processing performed by one or more processing units 304A and/or pathway article data stored on server 312. For example, image capture device 200A may be configured to capture an image of pathway article 100, which may include unique identification information (e.g., a unique identification number). One or more processing units 304A may discover the unique identification information corresponding to pathway article 100 during image processing. Upon determining the unique identification information corresponding to pathway article 100, one or more processing units 304A may be configured to request pathway article data corresponding to the same unique identification information from server 312. In response to the request, server 312 may send pathway article data (e.g., other captured images of the same pathway article 100, running average information, or the like) corresponding to the same unique identification information to computing device 302A.

In some examples, supplemental information 104B may be used as a reference marker in relation to supplemental information 104A, or vice versa. In such examples, this known relationship may be leveraged during image processing to help find either supplemental information 104A or 104B.

In other examples, server 312 may be configured to receive a captured image of pathway article 100 from image capture device 200A and/or computing device 302A for image processing. In such examples, image capture device 200A and/or computing device 302A may be configured to send the captured image of pathway article 100 to server 312 via, for example, a wired connection, a wireless connection, or a combination thereof. Server 312 may be configured to receive the captured image that was captured by image capture device 200A. Server 312 may be configured to store the received captured image in one or more memories 352. One or more memories 352 may include short-term memory space (e.g., volatile memory space, buffer space, or the like) or long-term memory space (e.g., non-volatile memory space or the like). Server 312 may be configured to perform, via one or more processing units 350, image processing on the captured image received from image capture device 200A and/or computing device 302A.

Based on the image processing performed by server 312, server 312 may be configured to reach a calibration determination and/or a pathway article disrepair determination. A calibration determination may be indicative of whether image capture device 200A is calibrated. In some examples, the calibration determination may be a first calibration determination or a second calibration determination. The first calibration determination may be that image capture device 200A is calibrated, and the second calibration determination may be that image capture device 200A is not calibrated. Otherwise described, server 312 may be configured to determine whether image capture device 200A is or is not calibrated based on the image processing performed on calibration information of supplemental information 104 in the captured image received from image capture device 200A and/or computing device 304A. Reference to supplemental information 104 may refer to supplemental information 104, first supplemental information 104A, and/or second supplemental information 104B as described herein.

For example, server 312 may be configured to determine that image capture device 200A is or is not calibrated based on one or more characteristics of the calibration information in the image captured by image capture device 200A compared to what the one or more characteristics should look like (e.g., an original and/or artifact-free image of the calibration information). For example, server 312 may be configured to compare calibration information of two or more images: calibration information of a first image and calibration information of a second image, where the first image may be the image of pathway article 100 captured by image capture device 200A and the second image may be an original and/or artifact-free version of the calibration information in the first image. Server 312 may be configured to compensate for various factors (e.g., the distance and angle at which image capture device 200A captured the image of pathway article 100) to enable a closer and more accurate comparison between the first and second images. Less differences between the calibration information in the first image and the second image may equate to less need for calibration adjustments, whereas more differences between the calibration information in the first image and the second image may equate to greater need for one or more calibration adjustments. No differences or less differences may result in the first calibration determination being reached, and more differences may result in the second calibration determination being reached.

A pathway article disrepair determination (or, more succinctly, disrepair determination) may be indicative of whether pathway article 100 is in disrepair (e.g., whether pathway article 100 is in good condition or poor condition). In some examples, the disrepair determination may be a first disrepair determination or a second disrepair determination. The first disrepair determination may be that pathway article 100 is in disrepair (e.g., is in a poor condition), and the second disrepair determination may be that pathway article 100 is not in disrepair (e.g., is in good condition). Otherwise described, server 312 may be configured to determine whether pathway article 100 in the image captured by image capture device 200A is or is not in disrepair based on the image processing performed on supplemental information 104. In some examples, the first disrepair determination may be reached if the quality or resolution of the calibration information in an image has deteriorated below a threshold level. Reference to supplemental information 104 may refer to supplemental information 104, first supplemental information 104A, and/or second supplemental information 104B as described herein.

For example, server 312 may be configured to determine that pathway article 100 is or is not in disrepair based on the quality (e.g., readability) of the calibration information of supplemental information in the image captured by image capture device 200A. For example, if the calibration information is unreadable or otherwise unrecognizable in the image, server 312 may reach at least one of the following determinations: the second calibration determination or the first disrepair determination. As another example, less differences between the calibration information in the technique involving a comparison of calibration information of a first image and calibration information of a second image may result in the second disrepair determination being reached, whereas more differences may result in the first disrepair determination being reached.

In some examples, server 312 may be configured to store the captured image of pathway article 100 and/or data derived from the image processing performed on the captured image in one or more memories 352. Individually or jointly, such information may be referred to as pathway article data. For example, pathway article data may include one or more of the following: a captured image or data derived from image processing performed on the captured image. Data derived from the image processing performed on the captured image may include, for example, data representative of a calibration determination, data representative of a disrepair determination, data representative of one or more image capture device parameters or functions, or any other data derived from the image processing. Information stored on server 312 may be accessible by other image capture devices and/or computing devices of other vehicles.

In some examples, pathway article data may include data indicative of any determinations derived from the image processing. Data derived from the image processing (e.g., data derived from the image processing performed by server 312) may include data indicative of any differences between the calibration information in the captured image and the calibration information in the original and/or artifact-free version. Data derived from the image processing may include data corresponding to information associated with pathway article 100 in the captured image, such as data extracted from (e.g., decoded from) second supplemental information 104B (e.g., the unique identifier corresponding to pathway article 100). Data derived from the image processing may include data indicative of any determinations derived from the image processing.

In some examples, server 312 may be configured to reach a calibration determination and/or a pathway article disrepair determination based on the image processing performed by server 312 and/or pathway article data stored on server 312. For example, image capture device 200A may be configured to capture an image of pathway article 100, which may include unique identification information (e.g., a unique identification number). Server 312 may discover the unique identification information corresponding to pathway article 100 during image processing. Upon determining the unique identification information corresponding to pathway article 100, server 312 may be configured to request pathway article data corresponding to the same unique identification information from one or more memories 352. In response to the request, server 312 may obtain the requested pathway article data (e.g., other captured images of the same pathway article 100, running average information, or the like) corresponding to the same unique identification information, and may be configured to perform one or more processes based thereon.

In some examples, supplemental information 104B may be used as a reference marker in relation to supplemental information 104A, or vice versa. In such examples, this known relationship may be leveraged during image processing to help find either supplemental information 104A or 104B.

Image capture device 200A, computing device 302A, and/or server 312 may be configured to perform one or more processes based on the calibration determination and/or the disrepair determination.

For example, image capture device 200A, computing device 302A, and/or server 312 may be configured to perform, based on the calibration determination and/or disrepair determination, calibration of image capture device 200A, which may include the adjustment of one or more components, parameters, or functions of image capture device 200A. For example, computing device 302A and/or server 312 may send one or more calibration adjustment instructions to image capture device 200A, which image capture device 200A may receive and may be configured to adjust one or more components, parameters, or functions identified in the one or more or more calibration instructions in accordance with the instructions. The one or more calibration instructions may identify one or more components, parameters, or functions; and specify the adjustment to the one or more components, parameters, or functions. Server 312 may communicate directly with image capture device 200A or may communicate with image capture device 200A through computing device 302A. For example, computing device 302A may forward one or more calibration adjustment instruction received from server 312 to image capture device 200A.

As another example, image capture device 200A, computing device 302A, and/or server 312 may be configured to issue one or more alerts or notifications based on the calibration determination and/or disrepair determination. In some examples, an alert and a notification may be synonymous. In other examples, an alert may carry higher priority than a notification. An alert or notification may include any visual information and/or audio information. For example, an alert or notification may include a message (e.g., a text message, a picture message, a twitter message, an email message, an audible message or the like). In some examples, an alert or notification may be directed at or otherwise sent to a computing device (e.g., a phone, tablet, personal data assistant, computer, or any computing device) associated with an occupant or owner of vehicle 300A to inform the occupant or owner of one or more determinations reached by image capture device 200A, computing device 302A, and/or server 312 concerning image capture device 200A and/or pathway article 100.

In some examples, an alert or notification including information relating to one or more determinations reached by image capture device 200A, computing device 302A, and/or server 312 concerning image capture device 200A and/or pathway article 100 may be directed at or otherwise sent to a computing device (e.g., a phone, tablet, personal data assistant, computer, or any computing device). The computing device may be associated with a user (e.g., a person, a repair person, maintenance personnel, or the like). The alert or notification may be configured to inform the user about image capture device 200A and/or pathway article 100. For example, the alert or notification may include repair (e.g., maintenance) or replacement information if pathway article 100 is in disrepair (e.g., is in a poor condition). In some examples, repair or replacement information may include information identifying that pathway article 100 is in disrepair, a date for which repair of pathway article 100 is scheduled (e.g., a scheduled repair date), a date for which replacement of pathway article 100 is scheduled (e.g., a scheduled replacement date), a request to repair pathway article 100, a request to replace pathway article 100, any combination thereof, or the like.

In some examples, image capture device 200A, computing device 302A, and/or server 312 may be configured to, based on the calibration determination and/or disrepair determination, adjust a method of travel for vehicle 300A. Adjusting the method of travel for vehicle 300A may include reducing speed until image capture device 200A is calibrated, stopping vehicle 300A until image capture device 200A is calibrated, or the like. For example, image capture device 200A and/or server 312 may send one or more travel adjustment instructions to computing device 302A, which computing device 302A may receive and may be configured to adjust travel in accordance with the instructions. The one or more travel adjustment instructions may specify a speed adjustment, a minimum follow distance adjustment, or any rule of travel adjustment.

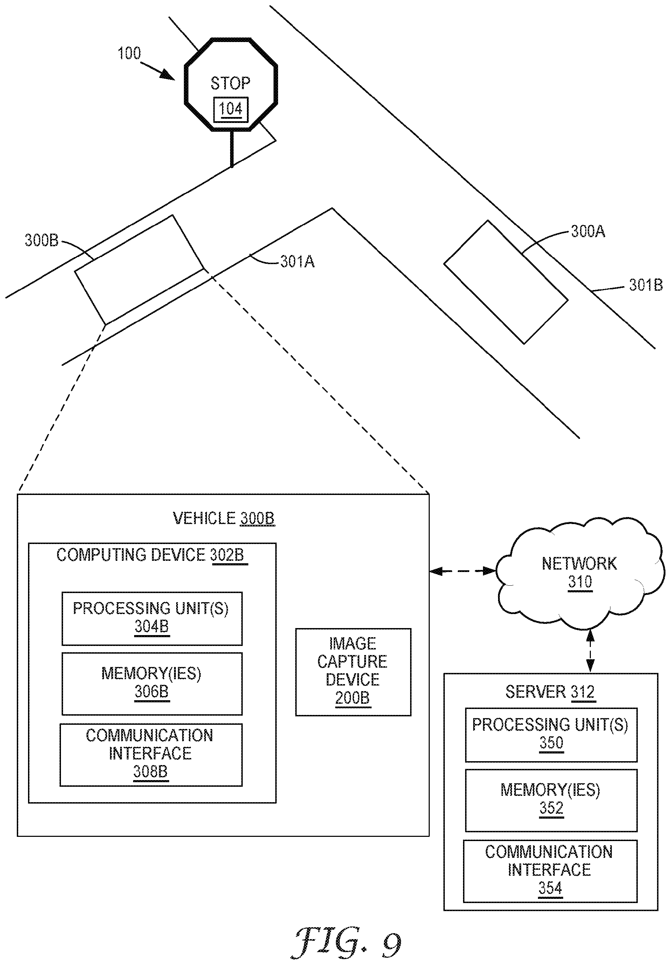

FIG. 9 illustrates a system including multiple vehicles and a pathway article in accordance with one or more techniques of this disclosure. Vehicle 300A is vehicle 300A described with respect to FIG. 8. Vehicle 300B includes similar components as vehicle 300A, which are similarly named and perform in like manner to the components of vehicle 300A. For example, vehicle 300B may include at least one image capture device 200 shown as image capture device 200B. Image capture device 200B may perform in like manner relative to image capture device 200A.

In the example of FIG. 9, vehicle 300A has moved from pathway 301A to 301B, and vehicle 300B is shown on pathway 301A. In some examples, image capture device 200B, computing device 302B, and/or server 312 may be configured to perform image processing on an image of pathway article 100 captured by image capture device 200B independently from any information stored on server 312 (e.g., pathway article data) corresponding to the same pathway article 100 and independently from any information processed, derived, or received by image capture device 200A and/or computing device 302A. In some examples, vehicle 300B may function independently from vehicle 300A. In some examples, image capture device 200B, computing device 302B, and/or server 312 may be configured to perform image processing on an image of pathway article 100 captured by image capture device 200B, which may include using information stored on server 312 (e.g., pathway article data) corresponding to the same pathway article 100.

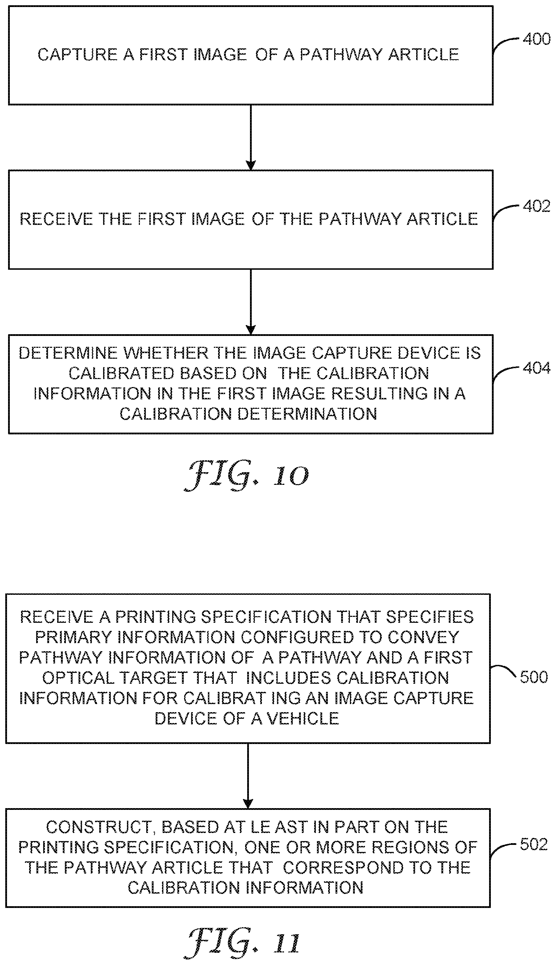

FIG. 10 is a flowchart showing an example method in accordance with one or more techniques of this disclosure. The method of FIG. 10 may be carried out by one or more of: an image capture device (e.g., image capture device 200, image capture device 200A, or image capture device 200B), a computing device of a vehicle (e.g., computing device 302A or computing device 302B), or a server (e.g., server 312).

In some examples, an image capture device of a first vehicle may be configured to capture a first image of a pathway article (400). The pathway article may include primary information that includes one or more physical properties of the pathway article configured to convey pathway information of a pathway. The pathway article may include a first optical target that includes calibration information for calibrating the image capture device of the first vehicle. In some examples, the calibration information is different from the one or more physical properties of the pathway article configured to convey pathway information. In some examples, the calibration information is configured to be visible to the image capture device.

A computing device of the first vehicle may be configured to receive the first image of the pathway article (402). The first image may include the calibration information. The computing device of the first vehicle may be configured to determine whether the image capture device is calibrated based on the calibration information in the first image resulting in a calibration determination (404). The computing device of the first vehicle may be configured to perform at least one of the following actions based on the calibration determination: adjust one or more components, parameters, or functions of the image capture device of the first vehicle; schedule maintenance or repair of the image capture device; or adjust a method of travel for the first vehicle.

In some examples, a computing device of a second vehicle may be configured to receive the first image of the pathway article or information relating to or derived from the first image of the pathway article, such as from a server. An image capture device of the second vehicle may be configured to capture a second image of the pathway article. The computing device of the second vehicle may be configured to receive the second image of the pathway article. The second image may include the calibration information. The computing device of the second vehicle may be configured to determine whether the image capture device of the second vehicle is calibrated based on at least one of the calibration information in the second image, the calibration information in the first image, or information relating to or derived from the first image of the pathway article resulting in a second calibration determination.

The computing device of the second vehicle may be configured to perform at least one of the following actions based on the second calibration determination: adjust one or more components, parameters, or functions of the image capture device of the second vehicle; schedule maintenance or repair of the second capture device; or adjust a method of travel for the second vehicle.

FIG. 11 is a flowchart showing an example method in accordance with one or more techniques of this disclosure. The example method of FIG. 11 includes receiving a printing specification that specifies primary information configured to convey pathway information of a pathway and a first optical target that includes calibration information for calibrating an image capture device of a vehicle (500), and constructing, based at least in part on the printing specification, one or more regions of the pathway article that correspond to the calibration information (502).

The various examples described herein may be combined in any combination.

In accordance with this disclosure, the term "or" may be interrupted as "and/or" where context does not dictate otherwise. Additionally, while phrases such as "one or more" or "at least one" or the like may have been used for some features disclosed herein but not others; the features for which such language was not used may be interpreted to have such a meaning implied where context does not dictate otherwise.

In one or more examples, the functions described may be implemented in hardware, software, firmware, or any combination thereof. If implemented in software, the functions may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media, which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor" or like term (e.g., "processing unit"), as used may refer to any of the foregoing structure or any other structure suitable for implementation of the techniques described. In addition, in some aspects, the functionality described may be provided within dedicated hardware and/or software modules. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

It is to be recognized that depending on the example, certain acts or events of any of the methods described herein can be performed in a different sequence, may be added, merged, or left out altogether (e.g., not all described acts or events are necessary for the practice of the method). Moreover, in certain examples, acts or events may be performed concurrently, e.g., through multi-threaded processing, interrupt processing, or multiple processors, rather than sequentially.

In some examples, a computer-readable storage medium includes a non-transitory medium. The term "non-transitory" indicates, in some examples, that the storage medium is not embodied in a carrier wave or a propagated signal. In certain examples, a non-transitory storage medium stores data that can, over time, change (e.g., in RAM or cache).

Various examples of the disclosure have been described. These and other examples are within the scope of the following claims.

## Claims

1. A method comprising:
capturing, by an image capture device (200A) of a first vehicle, a first image of a pathway article (100), wherein the pathway article (100) comprises primary information (102) that includes one or more physical properties of the pathway article (100) configured to convey pathway information of a pathway (301A), wherein the pathway article (100) comprises a first optical target that includes calibration information for calibrating the image capture device (200A) of the first vehicle, wherein the calibration information is different from the one or more physical properties of the pathway article (100) configured to convey pathway information, and wherein the calibration information is configured to be visible to the image capture device (200A);
receiving, by a computing device (302A) of the first vehicle, the first image of the pathway article (100), wherein the first image includes the calibration information;
determining, by the computing device (302A) of the first vehicle, whether the image capture device (200A) is calibrated based on the calibration information in the first image resulting in a calibration determination,
receiving, by a computing device (302B) of a second vehicle, the first image of the pathway article (100) or information relating to or derived from the first image of the pathway article (100),
capturing, by an image capture device (200B) of the second vehicle, a second image of the pathway article (100);
receiving, by the computing device (302B) of the second vehicle, the second image of the pathway article (100), wherein the second image includes the calibration information; and
determining, by the computing device (302B) of the second vehicle, whether the image capture device (200B) of the second vehicle is calibrated based on at least one of the calibration information in the second image, the calibration information in the first image, or information relating to or derived from the first image of the pathway article (100) resulting in a second calibration determination.

2. The method of claim 1, further comprising:
performing, by the computing device (302A) of the first vehicle, at least one of the following actions based on the calibration determination:
adjust one or more components, parameters, or functions of the image capture device (200A) of the first vehicle;
schedule maintenance or repair of the image capture device (200A); or
adjust a method of travel for the first vehicle.

3. The method of claim 1 or 2, further comprising:
receiving, by the computing device (302B) of the second vehicle, the first image of the pathway article (100) or the information relating to or derived from the first image of the pathway article (100) from a server (312).

4. The method of claim 1, further comprising:
performing, by the computing device (302B) of the second vehicle, at least one of the following actions based on the second calibration determination:
adjust one or more components, parameters, or functions of the image capture device (200B) of the second vehicle;
schedule maintenance or repair of the second capture device; or
adjust a method of travel for the second vehicle.

5. The method of any of claims 1-4, wherein the first optical target further includes information associated with the pathway article (100), wherein the information associated with the pathway article (100) is different from the one or more physical properties of the pathway article (100) configured to convey pathway information and the calibration information, and wherein the first optical target is integrated with a surface of the pathway article (100) such that the information associated with the pathway article (100) is readable by the image capture device (200A).

6. The method of any of claims 1-4, wherein the pathway article (100) further comprises:
a second optical target that includes information associated with the pathway article (100), wherein the second optical target is integrated with a surface of the pathway article (100) such that the information associated with the pathway article (100) is readable by the image capture device (200A).

7. The method of any of claims 5 or 6, wherein the information associated with the pathway article is represented by a two-dimensional barcode.

8. The method of any of claims 5-7, wherein the information associated with the pathway article includes at least one of:
data representative of a unique identification number that uniquely identifies the pathway article (100);
data representative of a type corresponding to the pathway article (100), wherein the type includes a sign, a channeling device, a traffic control device, a light, or a pathway marking;
data representative of a location of the pathway article (100);
data representative of an age of the pathway article (100);
data representative of an installation date of the pathway article (100);
data representative of one or more physical properties of the pathway article (100);
data representative of scheduled maintenance or repair of the pathway article (100);
data representative of a replacement date for the pathway article (100);
data representative of a manufacturer of the pathway article (100); or
data representative of a model number, part number, or lot number of the pathway article (100),
wherein preferably the data representative of the location of the pathway article (100) includes GPS data.

9. The method of any of claims 1-8, wherein at least one of:
the pathway article (100) is configured to be positioned adjacent to the pathway (301A),
the pathway article (100) is positioned adjacent to the pathway (301A),
the pathway article (100) is configured to be positioned above the pathway (301A),
the pathway article (100) is positioned above the pathway (301A),
the pathway article (100) is configured to be attached to the pathway (301A),
the pathway article (100) is attached to the pathway (301A),
the pathway article (100) is configured to be integrated with a pathway marking, or
the pathway article (100) is integrated with the pathway marking.

10. The method of any of claims 1-9, wherein the calibration information includes a checkerboard test pattern or
wherein the calibration information includes a resolution test pattern.

11. The method of any of claims 1-10, wherein the calibration information is configured to be visible to the human vision system.

12. The method of any of claims 1-10, wherein the calibration information is configured to be invisible to the human vision system.

13. The method of any of claims 1-10, wherein the calibration information is configured to be visible within the infrared light spectrum or the ultraviolet light spectrum, and invisible within the visible light spectrum.

14. The method of any of claims 1-10, wherein the calibration information is configured to be visible within the visible light spectrum.

15. The method of any of claims 1-10, wherein the vehicle is at least one of: a pathway-article assisted vehicle or an unassisted vehicle.

## Patentansprüche

1. Ein Verfahren, aufweisend:
Aufnehmen eines ersten Bildes eines Fahrbahngegenstands (100) mit einer Bildaufnahmevorrichtung (200A) eines ersten Fahrzeugs, wobei der Fahrbahngegenstand (100) primäre Informationen (102) aufweist, welche eine oder mehrere physische Eigenschaften des Fahrbahngegenstands (100) einschließen, welche konfiguriert sind, Fahrbahninformationen einer Fahrbahn (301A) zu übermitteln, wobei der Fahrbahngegenstand (100) ein erstes optisches Ziel aufweist, welches Kalibrierungsinformationen zum Kalibrieren der Bildaufnahmevorrichtung (200A) des ersten Fahrzeugs einschließt, wobei sich die Kalibrierungsinformationen von der einen oder den mehreren physischen Eigenschaften des Fahrbahngegenstands (100) unterscheiden, die konfiguriert sind, Fahrbahninformationen zu übermitteln, und wobei die Kalibrierungsinformationen konfiguriert sind, für die Bildaufnahmevorrichtung (200A) sichtbar zu sein;
Empfangen des ersten Bildes des Fahrbahngegenstands (100) mit einer Rechenvorrichtung (302A) des ersten Fahrzeugs, wobei das erste Bild die Kalibrierungsinformationen aufweist;
Bestimmen von der Rechenvorrichtung (302A) des ersten Fahrzeugs, ob die Bildaufnahmevorrichtung (200A) kalibriert ist, basierend auf den Kalibrierungsinformationen in dem ersten Bild, was zu einer Kalibrierungsbestimmung führt,
Empfangen des ersten Bildes des Fahrbahngegenstands (100) oder von Informationen, die sich auf das erste Bild des Fahrbahngegenstands (100) beziehen oder davon abgeleitet sind, mit einer Rechenvorrichtung (302B) eines zweiten Fahrzeugs,
Aufnehmen eines zweiten Bildes des Fahrbahngegenstands (100) mit einer Bildaufnahmevorrichtung (200B) des zweiten Fahrzeugs;
Empfangen des zweiten Bildes des Fahrbahngegenstands (100) mit der Rechenvorrichtung (302B) des zweiten Fahrzeugs, wobei das zweite Bild die Kalibrierungsinformationen aufweist; und
Bestimmen mit der Rechenvorrichtung (302B) des zweiten Fahrzeugs, ob die Bildaufnahmevorrichtung (200B) des zweiten Fahrzeugs kalibriert ist, basierend auf mindestens einem von den Kalibrierungsinformationen in dem zweiten Bild, den Kalibrierungsinformationen in dem ersten Bild oder Informationen, die sich auf das erste Bild des Fahrbahngegenstands (100) beziehen oder davon abgeleitet sind, was zu einer zweiten Kalibrierungsbestimmung führt.

2. Das Verfahren nach Anspruch 1, ferner aufweisend:
Durchführen mindestens einer der folgenden Handlungen mit der Rechenvorrichtung (302A) des ersten Fahrzeugs basierend auf der Kalibrierungsbestimmung:
Einstellen einer/eines oder mehrerer Komponenten, Parameter oder Funktionen der Bildaufnahmevorrichtung (200A) des ersten Fahrzeugs;
Planen einer Wartung oder Reparatur der Bildaufnahmevorrichtung (200A); oder Einstellen eines Fahrverfahrens für das erste Fahrzeug.

3. Das Verfahren nach Anspruch 1 oder 2, ferner aufweisend:
Empfangen, mit der Rechenvorrichtung (302B) des zweiten Fahrzeugs, des ersten Bildes des Fahrbahngegenstands (100) oder der Informationen, die sich auf das erste Bild des Fahrbahngegenstands (100) beziehen oder davon abgeleitet sind, von einem Server (312).

4. Das Verfahren nach Anspruch 1, ferner aufweisend:
Durchführen mindestens einer der folgenden Handlungen mit der Rechenvorrichtung (302B) des zweiten Fahrzeugs, basierend auf der zweiten Kalibrierungsbestimmung:
Einstellen einer/eines oder mehrerer Komponenten, Parameter oder Funktionen der Bildaufnahmevorrichtung (200B) des zweiten Fahrzeugs;
Planen einer Wartung oder Reparatur der zweiten Aufnahmevorrichtung; oder Einstellen eines Fahrverfahrens für das zweite Fahrzeug.

5. Das Verfahren nach einem der Ansprüche 1 bis 4, wobei das erste optische Ziel ferner Informationen einschließt, die mit dem Fahrbahngegenstand (100) in Verbindung stehen, wobei sich die mit dem Fahrbahngegenstand (100) in Verbindung stehenden Informationen von der einen oder den mehreren physischen Eigenschaften des Fahrbahngegenstands (100) unterscheiden, die konfiguriert sind, Fahrbahninformationen und die Kalibrierungsinformationen zu übermitteln, und wobei das erste optische Ziel in eine Fläche des Fahrbahngegenstands (100) integriert ist, so dass die mit dem Fahrbahngegenstand (100) in Verbindung stehenden Informationen von der Bildaufnahmevorrichtung (200A) lesbar sind.

6. Das Verfahren nach einem der Ansprüche 1 bis 4, wobei der Fahrbahngegenstand (100) ferner ein zweites optisches Ziel aufweist, welches mit dem Fahrbahngegenstand (100) in Verbindung stehende Informationen aufweist, wobei das zweite optische Ziel in eine Fläche des Fahrbahngegenstands (100) integriert ist, so dass die mit dem Fahrbahngegenstand (100) in Verbindung stehenden Informationen von der Bildaufnahmevorrichtung (200A) lesbar sind.

7. Das Verfahren nach einem der Ansprüche 5 oder 6, wobei die mit dem Fahrbahngegenstand in Verbindung stehenden Informationen
durch einen zweidimensionalen Barcode dargestellt sind.

8. Das Verfahren nach einem der Ansprüche 5 bis 7, wobei die mit dem Fahrbahngegenstand in Verbindung stehenden Informationen mindestens eines von Folgendem aufweisen:
Daten, welche eine eindeutige Identifikationsnummer darstellen, die den Fahrbahngegenstand (100) eindeutig identifiziert;
Daten, welche einen Typ darstellen, der dem Fahrbahngegenstand (100) entspricht, wobei der Typ ein Verkehrsschild, eine Leitvorrichtung, eine Verkehrssteuerungsvorrichtung, ein Lichtzeichen oder eine Fahrbahnmarkierung einschließt;
Daten, welche eine Position des Fahrbahngegenstands (100) darstellen;
Daten, welche ein Alter des Fahrbahngegenstands (100) darstellen;
Daten, welche ein Installationsdatum des Fahrbahngegenstands (100) darstellen;
Daten, welche eine oder mehrere physische Eigenschaften des Fahrbahngegenstands (100) darstellen;
Daten, welche eine geplante Wartung oder Reparatur des Fahrbahngegenstands (100) darstellen;
Daten, welche ein Austauschdatum für den Fahrbahngegenstand (100) darstellen;
Daten, welche einen Hersteller des Fahrbahngegenstands (100) darstellen; oder
Daten, welche eine Modellnummer, eine Bauteilnummer oder eine Chargennummer des Fahrbahngegenstands (100) darstellen,
wobei vorzugsweise die Daten, welche die Position des Fahrbahngegenstands (100) darstellen, GPS-Daten aufweisen.

9. Das Verfahren nach einem der Ansprüche 1 bis 8, wobei ferner mindestens eines von Folgendem zutrifft:
der Fahrbahngegenstand (100) ist konfiguriert, neben der Fahrbahn (301A) positioniert zu werden,
der Fahrbahngegenstand (100) ist neben der Fahrbahn (301A) positioniert,
der Fahrbahngegenstand (100) ist konfiguriert, oberhalb der Fahrbahn (301A) positioniert zu werden,
der Fahrbahngegenstand (100) ist oberhalb der Fahrbahn (301A) positioniert,
der Fahrbahngegenstand (100) ist konfiguriert, an der Fahrbahn (301A) angebracht zu werden,
der Fahrbahngegenstand (100) ist an der Fahrbahn (301A) angebracht,
der Fahrbahngegenstand (100) ist konfiguriert, in eine Fahrbahnmarkierung integriert zu werden, oder
der Fahrbahngegenstand (100) ist in die Fahrbahnmarkierung integriert.

10. Das Verfahren nach einem der Ansprüche 1 bis 9, wobei die Kalibrierungsinformationen ein Schachbrett-Testmuster aufweisen oder
wobei die Kalibrierungsinformationen ein Auflösungs-Testmuster aufweisen.

11. Das Verfahren nach einem der Ansprüche 1 bis 10, wobei die Kalibrierungsinformationen so konfiguriert sind, dass sie für das menschliche Auge sichtbar sind.

12. Das Verfahren nach einem der Ansprüche 1 bis 10, wobei die Kalibrierungsinformationen so konfiguriert sind, dass sie für das menschliche Auge unsichtbar sind.

13. Das Verfahren nach einem der Ansprüche 1 bis 10, wobei die Kalibrierungsinformationen so konfiguriert sind, dass sie innerhalb des Infrarot-Lichtspektrums oder des Ultraviolett-Lichtspektrums sichtbar und innerhalb des sichtbaren Lichtspektrums unsichtbar sind.

14. Das Verfahren nach einem der Ansprüche 1 bis 10, wobei die Kalibrierungsinformationen so konfiguriert sind, dass sie innerhalb des sichtbaren Lichtspektrums sichtbar sind.

15. Das Verfahren nach einem der Ansprüche 1 bis 10, wobei das Fahrzeug mindestens eines aus Folgendem ist: ein durch Fahrbahngegenstände assistiertes Fahrzeug oder ein unassistiertes Fahrzeug.

## Revendications

1. Procédé comprenant :
la capture, par un dispositif de capture d'image (200A) d'un premier véhicule, d'une première image d'un article de voie (100), dans lequel l'article de voie (100) comprend des informations primaires (102) qui incluent une ou plusieurs propriétés physiques de l'article de voie (100) configurées pour transporter des informations de voie d'une voie (301A), dans lequel l'article de voie (100) comprend une première cible optique qui inclut des informations d'étalonnage pour l'étalonnage du dispositif de capture d'image (200A) du premier véhicule, dans lequel les informations d'étalonnage sont différentes de la ou des propriétés physiques de l'article de voie (100) configurées pour transporter des informations de voie, et dans lequel les informations d'étalonnage sont configurées pour être visibles par le dispositif de capture d'image (200A) ;
la réception, par un dispositif informatique (302A) du premier véhicule, de la première image de l'article de voie (100), dans lequel la première image inclut les informations d'étalonnage ;
le fait de déterminer, par le dispositif informatique (302A) du premier véhicule, si le dispositif de capture d'image (200A) est étalonné sur la base des informations d'étalonnage dans la première image résultant en une détermination d'étalonnage,
la réception, par un dispositif informatique (302B) d'un deuxième véhicule, de la première image de l'article de voie (100) ou d'informations se rapportant à ou dérivées de la première image de l'article de voie (100),
la capture, par un dispositif de capture d'image (200B) du deuxième véhicule, d'une deuxième image de l'article de voie (100) ;
la réception, par le dispositif informatique (302B) du deuxième véhicule, de la deuxième image de l'article de voie (100), dans lequel la deuxième image inclut les informations d'étalonnage ; et
le fait de déterminer, par le dispositif informatique (302B) du deuxième véhicule, si le dispositif de capture d'image (200B) du deuxième véhicule est étalonné sur la base d'au moins l'une parmi les informations d'étalonnage dans la deuxième image, les informations d'étalonnage dans la première image, ou des informations se rapportant à ou dérivées de la première image de l'article de voie (100) résultant en une deuxième détermination d'étalonnage.

2. Procédé selon la revendication 1, comprenant en outre :
la mise en œuvre, par le dispositif informatique (302A) du premier véhicule, d'au moins l'une des actions suivantes sur la base de la détermination d'étalonnage :
l'ajustement d'un ou plusieurs composants, paramètres, ou fonctions du dispositif de capture d'image (200A) du premier véhicule ;
la planification de maintenance ou de réparation du dispositif de capture d'image (200A) ; ou
l'ajustement d'un procédé de déplacement pour le premier véhicule.

3. Procédé selon la revendication 1 ou 2, comprenant en outre :
la réception, par le dispositif informatique (302B) du deuxième véhicule, de la première image de l'article de voie (100) ou des informations se rapportant à ou dérivées de la première image de l'article de voie (100) à partir d'un serveur (312).

4. Procédé selon la revendication 1, comprenant en outre :
la mise en œuvre, par le dispositif informatique (302B) du deuxième véhicule, d'au moins l'une des actions suivantes sur la base de la deuxième détermination d'étalonnage :
l'ajustement d'un ou plusieurs composants, paramètres, ou fonctions du dispositif de capture d'image (200B) du deuxième véhicule ;
la planification de maintenance ou de réparation du deuxième dispositif de capture ; ou
l'ajustement d'un procédé de déplacement pour le deuxième véhicule.

5. Procédé selon l'une quelconque des revendications 1 à 4, dans lequel la première cible optique inclut en outre des informations associées à l'article de voie (100), dans lequel les informations associées à l'article de voie (100) sont différentes de la ou des propriétés physiques de l'article de voie (100) configurées pour transporter des informations de voie et des informations d'étalonnage, et dans lequel la première cible optique est intégrée à une surface de l'article de voie (100) de telle sorte que les informations associées à l'article de voie (100) sont lisibles par le dispositif de capture d'image (200A).

6. Procédé selon l'une quelconque des revendications 1 à 4, dans lequel l'article de voie (100) comprend en outre :
une deuxième cible optique qui inclut des informations associées à l'article de voie (100), dans lequel la deuxième cible optique est intégrée à une surface de l'article de voie (100) de telle sorte que les informations associées à l'article de voie (100) sont lisibles par le dispositif de capture d'image (200A).

7. Procédé selon l'une quelconque des revendications 5 ou 6, dans lequel les informations associées à l'article de voie sont représentées par un code-barres à deux dimensions.

8. Procédé selon l'une quelconque des revendications 5 à 7, dans lequel les informations associées à l'article de voie incluent au moins l'une parmi :
des données représentatives d'un numéro d'identification unique qui identifie de façon unique l'article de voie (100) ;
des données représentatives d'un type correspondant à l'article de voie (100), dans lequel le type inclut un signal, un dispositif de canalisation, un dispositif de régulation de trafic, un feu, ou un marquage de voie ;
des données représentatives d'une localisation de l'article de voie (100) ;
des données représentatives d'une ancienneté de l'article de voie (100) ;
des données représentatives d'une date d'installation de l'article de voie (100) ;
des données représentatives d'une ou plusieurs propriétés physiques de l'article de voie (100) ;
des données représentatives d'une maintenance ou réparation programmée de l'article de voie (100) ;
des données représentatives d'une date de remplacement pour l'article de voie (100) ;
des données représentatives d'un fabricant de l'article de voie (100) ; ou
des données représentatives d'un numéro de modèle, numéro de pièce ou numéro de lot de l'article de voie (100),
dans lequel de préférence les données représentatives de la localisation de l'article de voie (100) incluent des données GPS.

9. Procédé selon l'une quelconque des revendications 1 à 8, dans lequel au moins l'un parmi :
l'article de voie (100) est configuré pour être positionné adjacent à la voie (301 A),
l'article de voie (100) est positionné adjacent à la voie (301A),
l'article de voie (100) est configuré pour être positionné au-dessus de la voie (301A),
l'article de voie (100) est positionné au-dessus de la voie (301A),
l'article de voie (100) est configuré pour être fixé à la voie (301A),
l'article de voie (100) est fixé à la voie (301A),
l'article de voie (100) est configuré pour être intégré à un marquage de voie, ou
l'article de voie (100) est intégré au marquage de voie.

10. Procédé selon l'une quelconque des revendications 1 à 9, dans lequel les informations d'étalonnage incluent un motif de test en damier ou
dans lequel les informations d'étalonnage incluent un motif de test de résolution.

11. Procédé selon l'une quelconque des revendications 1 à 10, dans lequel les informations d'étalonnage sont configurées pour être visibles pour le système de vision humaine.

12. Procédé selon l'une quelconque des revendications 1 à 10, dans lequel les informations d'étalonnage sont configurées pour être invisibles pour le système de vision humaine.

13. Procédé selon l'une quelconque des revendications 1 à 10, dans lequel les informations d'étalonnage sont configurées pour être visibles au sein du spectre de lumière infrarouge ou du spectre de lumière ultraviolette, et invisible au sein du spectre de lumière visible.

14. Procédé selon l'une quelconque des revendications 1 à 10, dans lequel les informations d'étalonnage sont configurées pour être visibles au sein du spectre de lumière visible.

15. Procédé selon l'une quelconque des revendications 1 à 10, dans lequel le véhicule est au moins l'un parmi : un véhicule assisté par article de voie ou un véhicule sans assistance.
